# NEUE EUROPÄISCHE PATENTSCHRIFT

(11) **EP 1 909 954 B2**
(45) Veröffentlichungstag und Bekanntmachung des Hinweises auf die Entscheidung über den Einspruch: **14.09.2016**
(45) Hinweis auf die Patenterteilung: 15.05.2013
(21) Anmeldenummer: 06707455.9
(22) Anmeldetag: 07.03.2006
(51) Int. Cl.: B01J 8/00

(54) **VERFAHREN ZUM BEFÜLLEN EINES REAKTORS**
METHOD FOR FILLING A REACTOR
PROCEDE DE REMPLISSAGE D'UN REACTEUR

(30) Priorität: 08.03.2005 DE 102005010645; 08.03.2005 US 659074 P
(43) Veröffentlichungstag der Anmeldung: 16.04.2008
(73) Patentinhaber: BASF SE, 67056 Ludwigshafen am Rhein (DE)
(72) Erfinder: PETZOLDT, Jochen, 67273 Weisenheim am Berg (DE); CREMER, Ulrich, 68161 Mannheim (DE); DIETERLE, Martin, 68167 Mannheim (DE)
(86) Internationale Anmeldenummer: PCT/EP2006/002086
(87) Internationale Veröffentlichungsnummer: WO 2006/094766

(56) Entgegenhaltungen:
- EP-A- 1 466 883
- EP-A1- 0 015 569
- EP-A2- 0 714 700
- WO-A2-2004/089856
- DE-A1- 10 119 933
- DE-A1- 10 360 057
- GB-A- 896 786
- US-A- 3 608 751
- US-A- 3 749 258
- PATENT ABSTRACTS OF JAPAN Bd. 1997, Nr. 10, 31. Oktober 1997 (1997-10-31) & JP 09 141084 A (MITSUBISHI RAYON CO LTD), 3. Juni 1997 (1997-06-03)
- Physical Properties of Glycerine and its solutions glycerian Producers Association, New York, 1963
- Prozeduren zur Inbetriebnahme und Außerbetriebnahme MAN DWE GmbH

## Beschreibung

Die vorliegende Erfindung betrifft ein Verfahren zum Befüllen eines Reaktors mit einem Multielementoxidkatalysator, die dabei erhaltenen befüllten Reaktoren und deren Verwendung zur Durchführung von katalytischen Gasphasenreaktionen.

Reaktoren, die mit Katalysatoren gefüllt sind, dienen der Durchführung verschiedener katalytischer Gasphasenreaktionen. Die eingesetzten Katalysatorteilchen bestehen dabei entweder aus einer katalytisch aktiven Masse, die - gegebenenfalls unter Verwendung geeigneter Bindemittel - durch Strangpressen, Tablettieren oder dergleichen zu Formkörpern geformt ist (so genannte Vollkatalysatoren), oder sie umfassen wenigstens eine katalytisch aktive Masse, die schalenförmig auf einen, in der Regel inerten, Träger aufgebracht ist (so genannte Schalenkatalysatoren). In der Regel erfolgt die großtechnische Realisierung solcher katalytischer Gasphasenreaktionen in Festbettreaktoren, d. h. das Reaktionsgasgemisch durchströmt eine ruhende Katalysatorschüttung, und die chemische Umsetzung erfolgt während der Verweilzeit in derselben. In Abhängigkeit von der Art der katalysierten Reaktion ist es erforderlich, die Reaktoren von außen zu beheizen oder sie zur Abfuhr von Wärme mit einem Wärmeaustauschmedium, wie einer Salzschmelze, zu umgeben. Daher werden katalytische Gasphasenreaktionen vielfach zweckmäßigerweise in Katalysator gefüllten Rohren durchgeführt, die häufig als Rohrbündelreaktoren (Vielkontaktrohrreaktoren) ausgeführt sind. Die Rohrlängen dieser Reaktoren erstrecken sich im Normalfall auf wenige Meter (eine typische Kontaktrohrlänge liegt im Bereich von etwa 2 bis 4 m) bei einem Innendurchmesser im Bereich weniger Zentimeter. Die eingesetzten Katalysatoren können in Form von Kugeln, Ringen, Zylindern, Würfeln, Quadern oder anderen geometrischen Körpern vorliegen, deren Längsausdehnung, dem Reaktorrohrinnendurchmesser angemessen, in der Regel einige Millimeter beträgt.

Beim Einfüllen von Katalysatorteilchen in einen Reaktor, insbesondere in ein vertikales Rohr, können auf Grund der mechanischen Belastung - je nach Seitendruckfestigkeit und Bruchfestigkeit der verwendeten Katalysatoren - Katalysatorteilchen zerbrechen oder die katalytisch aktive Masse teilweise vom Träger gelöst werden. Die sich bildenden Bruchstücke bzw. der Abrieb verdichten die Katalysatorschüttung und führen beim späteren Betrieb der Rohrreaktoren nachteiligerweise zu erhöhten Druckverlusten.

Eine Vielzahl von Dokumenten beschäftigt sich mit der Herstellung von teilchenförmigen Katalysatoren und deren Einsatz in Gasphasenreaktionen, ohne jedoch auf die Probleme beim Befüllen des Reaktors einzugehen.

Oxidativ chemisch Umsetzungen in der Gasphase an Vollkatalysatoren auf Basis von katalytisch aktiven Oxiden sind vielfach beschrieben. US-A 4,438,217 und US-A 4,522,671 empfehlen beispielsweise zur gasphasenkatalytisch oxidativen Herstellung von Acrolein bzw. Methacrolein den Einsatz von Vollkatalysator-Ringen. US-A 4,537,874 empfiehlt zur gasphasenkatalytisch oxidativen Herstellung α,β-monoethylenisch ungesättigter Aldehyde ebenfalls Katalysatorschüttungen aus Vollkatalysator-Ringen auf der Basis von Molybdän als Hauptbestandteil enthaltenden Multimetalloxiden.

Die DE-A 20 25 430 lehrt ein Verfahren zur Herstellung kugelförmiger Schalenkatalysatoren auf der Basis katalytisch aktiver Oxidmassen und den Einsatz für katalytische Gasphasenoxidationen, z. B. von Indanen zu Anthrachinon. Die DE-A 16 42 921 betrifft die Herstellung kugelförmiger oxidischer Schalenkatalysatoren durch Aufsprühen einer die oxidische Aktivmasse in gelöster oder suspendierter Form enthaltenden Flüssigkeit auf heiße kugelförmige Trägerkörper und die Verwendung der so erhaltenen Katalysatoren für die katalytische Gasphasenoxidation von aromatischen und ungesättigten Kohlenwasserstoffen zu Carbonsäuren oder deren Anhydriden. Die Lehre der DE-A 25 10 994 entspricht im Wesentlichen der Lehre der DE-A 16 42 921 mit dem Unterschied, dass sie auch ringförmige Träger einschließt. Aus der DE-A 21 06 796 ist die Herstellung von Schalenkatalysatoren für katalytische Gasphasenoxidation bekannt, indem man wässrige Suspensionen des katalytisch wirksamen oxidischen Materials auf die bewegten Trägerkörper sprüht. Zur Erhöhung der Haftfestigkeit der oxidischen katalytisch aktiven Schale auf der Oberfläche des Trägerkörpers empfiehlt die DE-A 26 26 887 das Einarbeiten anorganischer Hydroxysalze in die aufzusprühende wässrige Suspension. Die Lehre der DE-A 29 09 670 entspricht im Wesentlichen derjenigen der DE-A 26 26 887. Dabei können als Suspendiermedium auch Gemische aus Wasser und Alkohol verwendet werden. Die DE-A 29 09 671 beschreibt ein Verfahren zur Herstellung von Schalenkatalysatoren, bei dem die kugelförmigen Trägerkörper periodisch unter zwei in bestimmtem Abstand aufeinanderfolgend angeordneten Dosiervorrichtungen hindurch geführt werden.

Die GB-1 331 423, EP-A 286 448 und die EP-A 37 492 betreffen Verfahren zur Herstellung von kugelförmigen oxidischen Schalenkatalysatoren. Die EP-B 293 859 offenbart ein Verfahren zur Herstellung von kugelförmigen Schalenkatalysatoren durch Anwendung einer zentrifugalen Strömungs-Beschichtungsvorrichtung. Als Bindemittel nennt EP-B 293 859 Wasser, Alkohol und Aceton neben Ammoniumnitrat, Graphit und Stärke.

Aus der DE-A 25 26 238, der US-3,956,377 und der DE-A 235 151 sind Verfahren zur Herstellung kugelförmiger Oxid-Schalenkatalysatoren bekannt, bei dem die Trägerkugeln zunächst mit Wasser oder einer anderen Flüssigkeit, wie Petrolether, als Bindemittel befeuchtet werden. Anschließend wird die katalytisch aktive Oxidmasse dadurch auf das mit Bindemittel angefeuchtete Trägermaterial aufgebracht, dass man das feuchte Trägermaterial in der pulverförmigen katalytisch aktiven Oxidmasse wälzt.

Die DE-A-103 60 057 und die DE-A-103 60 058 beschreiben Verfahren zur Herstellung katalytisch aktiver Multielementoxidmassen durch thermische Behandlung einer Vorläufermasse in einem Drehrohrofen.

Die WO 98/37967 beschreibt ein Verfahren zur Herstellung von Schalenkatalysatoren, bei dem man eine Lösung oder eine Suspension, die eine Vorläuferverbindung der katalytisch aktiven Massen enthält, auf den Katalysatorträger schalenförmig aufbringt und den auf diese Weise beschichteten Träger einer Wärmebehandlung unterzieht.

Die DE-A-198 24.532 beschreibt ein Verfahren zur Herstellung von Schalenkatalysatoren durch Aufsprühen einer bindemittelhaltigen wässrigen Aktivmassensuspension auf ein 50 bis 450 °C heißes Trägermaterial. Das eingesetzte Bindemittel besteht dabei aus einem Gemisch eines Polymerisats, welches ethylenisch ungesättigte Säureanhydride oder ethylenisch ungesättigte Dicarbonsäuren einpolymerisiert enthält, mit wenigstens einem Alkanolamin. Durch das Aufsprühen der Aktivmassensuspension auf den vorerhitzten Träger erfolgt eine Aushärtung des Binderzusatzes.

Die EP-A-714 700 beschreibt ein Verfahren zur Herstellung eines Schalenkatalysators, bei dem man einen Trägerkörper zunächst mit einem flüssigen Bindemittel befeuchtet, danach durch Inkontaktbringen mit trockener, feinteiliger, aktiver Oxidmasse an der Oberfläche des Trägerkörpers eine Schicht dieser Katalysatormasse anheftet und anschließend das flüssige Bindemittel entfernt.

Beladevorrichtungen für Rohrbündelreaktoren sind aus der DE-A-25 11 411, DE-A-28 49 664, EP-B-041 144, DE-A-199 34 324 und DE-A-102 50 022 bekannt. Die beim Einfüllen der Katalysatorteilchen auf Grund der mechanischen Belastung auftretenden Probleme sind in diesen Dokumenten nicht angesprochen.

Es ist weiterhin bekannt, zum Einfüllen von Katalysatorteilchen in Reaktoren Einfüllhilfen einzusetzen, beispielsweise um die Fallgeschwindigkeit der Katalysatorteilchen beim Einfüllen abzubremsen. So beschreibt die EP-A 548 999 ein Verfahren zum Befüllen von Rohren, bei dem die Katalysatorteilchen entlang einer Schnur eingefüllt werden, welche flexible Borsten aufweiset, die sich in Querrichtung erstrecken und beabstandet zueinander sind.

Ein weiteres Verfahren zum Einfüllen von Katalysatorteilchen in ein Rohr ist in der US 3,608,751 beschrieben. Bel der hier verwendeten Füllhilfe handelt es sich um einen flexiblen Körper, z. B. ein Hanfseil, an dem schrägstehende Flügel befestigt sind.

Die DE-A-103 37 998 beschreibt ein Verfahren zum Befüllen eines vertikalen Rohres mit Katalysatorteilchen, bei dem man als Füllhilfe einen flexiblen länglichen Körper in das vertikale Rohr einbringt und dann die Katalysatorteilchen einfüllt.

Der Einsatz von Füllhilfen ist jedoch immer mit einem zusätzlichen Aufwand beim Füllvorgang verbunden. Außerdem führen viele Füllhilfen bei kleinen Rohrdurchmessern rasch zum Verstopfen des Rohres oder zum Verhaken der Katalysatorteilchen. Zudem lässt sich Katalysatorbruch- bzw. -abrieb nicht immer in dem gewünschten Maße vermeiden.

Des weiteren beschreibt die GB 896 786 ein Verfahren zum Beschicken eines Reaktors mit einem pulverförmigen festen Katalysator, wobei der Katalysator kontinuierlich in einen Bereich dosiert wird, der mit einer Auslauföffnung, die mit dem Reaktor kommuniziert, versehen ist, und eine Flüssigkeit kontinuierlich in diesen Bereich dosiert wird, wobei die Flüssigkeit die Auslauföffnung durchströmt und den Katalysator dabei als Aufschlämmung in den Reaktor spült.

Die JP 09141084 beschreibt ein Befüllverfahren bei dem, zur Vermeidung von Staubbildung oder Katalysatorbruch, ein fester Katalysator von einem oberen Abschnitt eines Reaktionsrohrs fallen gelassen wird, um das Reaktionsrohr eines Festbettreaktors zu packen, wobei zuvor eine Flüssigkeit in das Reaktionsrohr gefüllt wird, welche nach dem Packen des Rohrs mit dem festen Katalysator wieder entfernt wird.

Die EP-A 015 569 beschreibt ein Verfahren zur Herstellung von Schalenkatalysatoren, wobei katalytisch aktives Material als wässrige Suspension auf Trägerteilchen aufgebracht wird. Nach einem Trocknungsschritt werden die Schalenkatalysatoren dann mit einem Restwassergehalt von im Allgemeinen unter 5 Gew.% in einen Reaktor eingefüllt. Als flüssige Komponente besagter Suspensionen wird ausschließlich Wasser offenbart.

Der vorliegende Erfindung liegt daher die Aufgabe zu Grunde, ein Verfahren zur Verfügung zu stellen, mit dem Reaktoren, insbesondere solche mit Rohren von geringem Durchmesser, wie sie für katalysierte Gasphasenreaktionen verwendet werden, effektiv befüllt werden können, wobei Katalysatorbruch- bzw. -abrieb vermieden werden kann.

Diese Aufgabe wird gelöst durch ein Verfahren zum Befüllen eines Reaktors mit Katalysatorteilchen, die zumindest auf ihrer Oberfläche eine katalytisch aktive Multlelementoxidmasse aufweisen, bei dem man Katalysatorteilchen bereitstellt, die eine bei 20 °C und 1 atm flüssige Substanz umfassen, und diese Katalysatorteilchen in den Reaktor füllt, wobei die bereitgestellten Katalysatorteilchen einen Gehalt an flüssiger Substanz von 0,05 bis 10 Gew.-%, bezogen auf ihr Gesamtgewicht, aufweisen, wobei die flüssige Substanz ausgewählt ist unter organischen Verbindungen, die einen Siedepunkt bei 1 atm von mehr als 100 °C aufweisen, und Gemischen solcher organischen Verbindungen mit Wasser, und wobei der Reaktor und die Katalysatorteilchen beim Befüllen des Reaktors eine Temperatur von höchstens 50 °C aufweisen.

Es wurde gefunden, dass durch das Befüllen des Reaktors mit Katalysatorteilchen, die eine flüssige Substanz enthalten, Katalysatorfüllungen mit vorteilhaften Eigenschaften erhalten werden. So weisen die Katalysatorteilchen mit einer solchen Flüssigkeit eine bessere mechanische Stabilität auf als Teilchen, die eine solche Flüssigkeit nicht enthalten. Die nach dem erfindungsgemäßen Verfahren erhaltenen Katalysator-gefüllten Reaktoren enthalten weniger Bruchstücke und/oder Abrieb, der auf die mechanische Belastung des Katalysators beim Füllvorgang zurückgeht. Somit wird eine weniger dicht gepackte, lockere Schüttung mit geringerem Schüttgewicht erzeugt. Hierdurch können beim Einsatz der Reaktoren Druckabfälle längs der Katalysatorfüllung zumindest verringert werden. Eine gleichmäßige Durchströmung des Reaktors und die Vermeidung von zu hohen Partialdrücken der Reaktanden ist insgesamt vorteilhaft für alle Arten von katalytischen Gasphasenreaktionen. So kann durch geringere Druckverluste beim Betrieb des Reaktors Kompressionsenergie eingespart werden, da das dem Reaktor zugeführte Gas auf ein geringeres Druckniveau komprimiert werden muss. Des Weiteren weisen beispielsweise die bei exothermen katalytischen Gasphasenoxidationen längs der Katalysatorrohre in Strömungsrichtung üblicherweise durchlaufenen Temperaturmaxima ("hot spots") eine reduzierten Amplitude auf. Dies wirkt sich vorteilhaft auf die Lebensdauer (Standzeit) der eingesetzten Aktivmasse aus. Des Weiteren kann ein geringerer Druckverlust bei der katalysierten Reaktion auch zu besseren Raum-Zeit-Ausbeuten führen. Die zuvor genannten Vorteile kommen speziell beim Befüllen von Rohrbündelreaktoren zum Tragen, die in der Regel wenigstens 5000 Katalysatorrohre aufweisen. So lässt sich beim Befüllen von Einzelrohren die Bildung von Bruchstücken und/oder von Abrieb wesentlich leichter vermeiden, beispielsweise durch entsprechend langsames Einfüllen oder den Einsatz entsprechender Füllhilfen. Bel großtechnischen Rohrbündelreaktoren ist das Eindringen einer neuen Katalysatorfüllung jedoch mit einem entsprechend langen Produktionsausfall verbunden und hat deshalb möglichst schnell zu erfolgen. Des Weiteren kann durch einen insgesamt geringeren Druckverlust beim Betrieb eines Rohrbündelreaktors mit einer Vielzahl von Katalysatorrohren deutlich mehr Kompressionsenergie eingespart werden, als bei einem Einzelrohrreaktor. Zudem ist speziell bei diesen Reaktoren eine möglichst gleichmäßige Reaktionsführung auch in Bezug auf jedes einzelne der eingesetzten Rohre erwünscht. Dies lässt sich jedoch nur durch eine gleichmäßige Beaufschlagung jedes Rohres mit dem Reaktionsgas erzielen, was eine im Wesentlichen gleichmäßige und intakte Befüllung aller Rohre mit den Katalysatorteilchen voraussetzt.

Bei der erfindungsgemäß eingesetzten flüssigen Substanz kann es sich prinzipiell um eine beliebige, unter Normalbedingungen (20 °C und 1 atm) flüssige Substanz handeln die ausgewählt ist unter organischen Verbindungen, die einen Siedepunkt bei 1 atm von mehr als 100 °C aufweisen, und Gemischen solcher organischen Verbindungen mit Wasser. Dazu zählen einzelne flüssige Verbindungen und Gemische aus zwei oder mehreren flüssigen Verbindungen. Die flüssige Substanz kann zusätzlich gelöste organischen Stoffe enthalten, worunter einzelne gelöste organische Verbindungen oder Gemische aus zwei oder mehreren gelösten organischen Verbindungen verstanden werden, wobei diese organischen Verbindungen bei 1 atm einen Siedepunkt von mehr als 100 °C aufweisen.

In einer bevorzugten Ausführung werden die Katalysatorteilchen mit einer flüssigen Substanz versetzt, die so ausgewählt ist, dass die zur Befüllung eingesetzten Teilchen diese Substanz in chemisch unveränderter Form enthalten. Darunter ist zu verstehen, dass sich bei einem Substanzgemisch zwar die Mengenzusammensetzung ändern kann, oder dass die Substanz in physikalische Wechselwirkung mit den Katalysatorteilchen treten kann, dass aber die chemische Zusammensetzung der flüssigen Substanz beim In Kontakt kommen mit der katalytisch aktiven Oxidmasse unverändert bleibt. Werden die Katalysatorteilchen mit einer, wie im Folgenden näher definierten, Zusammensetzung, z. B. in Form eines Bindemittels, versetzt, die neben der flüssigen Substanz weitere Komponenten enthält so enthalten die zur Befüllung eingesetzten Teilchen diese Zusammensetzung in insgesamt chemisch unveränderter Form. Insbesondere werden die Katalysatorteilchen nicht mit flüssigen Substanzen oder einer solche Substanzen enthaltenden Zusammensetzung versetzt, die Komponenten mit zu einer Reaktion befähigten komplementären funktionellen Gruppen aufweisen. Nach dem Befüllvorgang kann sich die chemische Zusammensetzung der flüssigen Substanz selbstverständlich ändern, z. B, durch gegebenenfalls durchgeführte Trocknungsschritte bei erhöhten Temperaturen.

In einer speziellen Ausführung ist die flüssige Substanz ausgewählt unterWasser, wassermischbaren organischen Verbindungen, die einen Siedepunkt bei Normaldruck (1 atm) von mehr als 100 °C aufweisen und Mischungen davon.

Geeignete organische Lösungsmittel, die bei 1 atm einen Siedepunkt von mehr als 100 °C aufweisen, sind hier beispielweise einwertige Alkohole (z. B. Pentanole, Cyclohexanol), Polyole (z. B. Ethylenglycol, Glycerin), Ether und Glycolether (z. B. Dibutylether, Anisol, Dioxan, Mono-, Di-, Tri-, Polyalkytenglycolether), Ketone (z. B. Cyclohexanon), Ester (z. B. Glykolester), Säuren (z. B. Essigsäure), Amine, Aminoalkohole, Amide und andere Stickstoff-Verbindungen (z. B. Ethanolamin, Diethanolamin. Dimethylformamid, Pyridin, N-Methytpyrrolidon. Schwefel-Verbindungen (z. B. Dimethylsulfoxid, Sulfolan), NitroVerbindungen (z. B. Nitrobenzol), Kohlenwasserstoffe (z. B. Benzine, Methylcyctohexan, Dekalin, Aromaten, wie Toluol, Xylole) sowie Mischungen der zuvor genannten Lösungsmittel.

Sofern die in dem erfindungsgemäßen Verfahren eingesetzte flüssige Substanz gelöste organische Stoffe enthält, so weisen diese einen Siedepunkt oder Sublimationspunkt bei Normaldruck (1 atm) von mehr als 100 °C auf. Geeignete gelöste organische Stoffe sind z. B. Fettsäuren, wie Caprin-, Undecan-, Laurin-, Tridecan-, Myristin-, Pentadecan-, Palmitin-, Margarin-, Stearin-, Nonadecan-, Arachin-, Behen-, Lignocerin-, Palmitolein-, Olein-, Linol-, Linolen-, Elaostearinsäure, etc. Geeignet sind weiterhin Mono- und Oligosaccharide.

In einer bevorzugten Ausführungsform handelt es sich bei der erfindungsgemäß eingesetzten flüssigen Substanz um eine Substanz, wie sie üblicherweise auch zur Herstellung der zum Befüllen des Reaktors eingesetzten Katalysatorteilchen eingesetzt wird. Dabei kann es sich beispielsweise um ein zur Katalysatorherstellung eingesetztes Bindemittel oder eine Komponente eines solchen Bindemittels handeln. Dann kann, sofern das Bindemittel aus dem Katalysator nicht entfernt wurde, in der Regel darauf verzichtet werden, die Katalysatorteilchen vor dem Befüllen des Reaktors mit der flüssigen Substanz in Kontakt zu bringen. Selbstverständlich ist es auch möglich, zur Durchführung des erfindungsgemäßen Verfahrens einen Katalysator, der herstellungsbedingt keine oder eine zu geringe Menge an flüssiger Substanz enthält durch übliche Verfahren, wie Besprühen, Tauchen, etc. mit der flüssigen Substanz in Kontakt zu bringen.

Bevorzugt wird als flüssige Substanz wenigstens eine unter Normalbedingungen (20 °C, 1 atm) flüssige wasserlösliche organische Verbindung eingesetzt, die einen Siedepunkt oder Sublimationspunkt bei Normaldruck (1 atm) von mehr als 100 °C aufweist. Des Weiteren bevorzugt wird die flüssige Substanz in Form einer Zusammensetzung eingesetzt, die Wasser oder wenigstens eine unter Normalbedingungen (20 °C, 1 atm) flüssige organischen Verbindung und eine wasserlösliche organische Verbindung umfasst, die einen Siedepunkt oder Sublimationspunkt bei Normaldruck (1 atm) von mehr als 100 °C aufweist. Zur letzteren Ausführung zählen:
- Gemische aus wenigstens einer unter Normalbedingungen flüssigen wasserlöslichen organischen Verbindung und wenigstens einer darin gelösten festen organischen Verbindung,
- Gemische aus Wasser und wenigstens einer (festen oder flüssigen) wasserlöslichen organischen Verbindung.

Vorzugsweise ist die organische Komponente der erfindungsgemäß eingesetzten flüssigen Zusammensetzungen ausgewählt unter nicht polymeren Komponenten, wobei Oligosaccharide jedoch zugelassen sein sollen.

Bevorzugt als flüssige Zusammensetzungen sind die gemäß der EP-A-714 700 als flüssiges Bindemittel eingesetzten Lösungen, die aus 20 bis 90 Gew.-% Wasser und 10 bis 80 Gew.-% einer in Wasser gelösten organischen Verbindung bestehen. Vorzugsweise beträgt der organische Anteil an der zu verwendenden flüssigen Zusammensetzung dann 10 bis 50 Gew.-% und insbesondere 20 bis 30 Gew.-%.

Als organische Komponente dieser flüssigen Zusammensetzungen eignen sich insbesondere ein- und mehrwertige organische Alkohole wie Ethylenglykol, 1,4-Butandiol, 1,8-Hexandiol oder Glycerin, ein- oder mehrwertige organische Carbonsäuren wie Propionsäure, Oxalsäure, Malonsäure, Glutarsäure oder Maleinsäure, Aminoalkohole wie Ethanolamin oder Diethanolamin, ein- oder mehrwertige organische Amide wie Formamid oder Monosaccharide und Oligosaccharide wie Glucose, Fructose, Saccharose oder Lactose.

Bevorzugt als flüssige Substanzen und Komponenten von solche Substanzen enthaltenden flüssigen Zusammensetzungen sind solche organischen Komponenten, deren Siedepunkt oder Sublimationstemperatur bei Normaldruck unterhalb der Calcinationstemperatur liegt, die zur Erzeugung der katalytisch aktiven Masse angewandt wurde. Ebenfalls bevorzugt sind solche organischen Komponenten, die sich Im Beisein von Sauerstoff an der katalytisch aktiven Oxidmasse unterhalb dieser Calcinationstemperatur in gasförmige Bestandteile zersetzen. Wie im Folgenden näher ausgeführt, Ist es ein wesentliches Merkmal des erfindungsgemäßen Verfahrens, dass die zum Befüllen des Reaktors eingesetzten Katalysatorteilchen die katalytisch aktive Masse als solche und keine Vorläufermasse aufweisen. Zu ihrer Herstellung wird üblicherweise eine solche Vorläufermasse einer thermischen Behandlung unterzogen, um sie In die katalytisch aktive oxidische Masse zu überführen (so genannte Calcinierung), Üblicherweise beträgt die Calcinationstemperatur < 500 °C, häufig <400 °C und vielfach < 300 °C. Sie beträgt In der Regel wenigstens 150 °C, bevorzugt wenigstens 200 °C und insbesondere wenigstens 250 °C. Besonders vorteilhaft sind erfindungsgemäß solche flüssigen Substanzen, deren Siedepunkt bei Normaldruck oberhalb 100 °C, vorzugsweise oberhalb 150 °C, liegt.

Beispielhaft für vorteilhaft einsetzbare flüssige Substanzen sind Glycerin und Glycerin/Wasser-Gemische.

Vorzugsweise weisen die zum Befüllen des Reaktors bereitgestellten Katalysatorteilchen einen Gehalt an flüssiger Substanz von 0,1 bis 5 Gew.%, insbesondere von 0,5 bis 2 Gew.-%, bezogen auf ihr Gesamtgewicht, auf.

Der Gehalt an flüssiger Substanz kann in guter Näherung durch Bestimmung des Gewichtsverlusts ermittelt werden, den die die flüssige Substanz umfassenden Katalysatorteilchen beim einstündigen Erhitzen auf 300 °C in Luft erleiden. Sofern ein fertiger (d. h. ein Katalysator, in dem die Phasenausbildung durch Calcination vollständig abgeschlossen ist) Katalysator vor dem Befüllen mit einer flüssigen Substanz in Kontakt gebracht wird, kann die enthaltene Menge an flüssiger Substanz auch durch einfache Bestimmung der Gewichtsdifferenz einer Probe des Katalysators bestimmt werden. Erfolgt das Inkontaktbringen mit der flüssigen Substanz im Rahmen der Herstellung der Katalysatorteilchen, so ist die enthaltene Menge an flüssiger Substanz aus der Gesamtmassenbilanz des Herstellungsverfahrens zu ermitteln.

In einer speziellen Ausführung enthalten die zum Befüllen des Reaktors bereitgestellten Katalysatorteilchen die flüssige Substanz in assoziierte Form. Im Rahmen der vorliegenden Erfindung wird unter einer assoziierten flüssigen Substanz ein flüssiges Medium verstanden, das der Katalysator auf Grund physikalischer Wechselwirkungen, wie Adsorption, aufweist. Dabei handelt es sich im Allgemeinen nicht um eine Flüssigphase auf der Katalysatoroberfläche, die als solche visuell in Erscheinung tritt, d. h. der maximale Sättigungsgrad der Katalysatorteilchen wird nicht überschritten.

Erfindungsgemäß weisen die zum Befüllen des Reaktors eingesetzten Katalysatorteilchen keine Vorläufermasse (Precursor) sondern die katalytisch aktive oxidische Masse als solche auf. Unter einer katalytisch aktiven Multielementoxidmasse wird dabei im Rahmen der Erfindung eine katalytisch aktive Masse verstanden, die die Metalle (ebenso wie alle anderen gegebenenfalls enthaltenen und von Sauerstoff verschiedenen Elemente) im Wesentlichen in oxidischer (und nicht in metallischer, elementarer) Form enthalten. Vorzugsweise beträgt der molare Anteil der Nichtmetalle an der Gesamtmenge aller von Sauerstoff verschiedenen Elemente der katalytisch aktiven Multielementoxidmasse höchstens 10 mol-%, besonders bevorzugt höchstens 5 mol-%. In einer speziellen Ausführung handelt es sich um reine Multimetalloxidmassen.

Die erfindungsgemäß eingesetzten Katalysatorteilchen weisen eine katalytisch aktive oxidische Masse auf, die dadurch charakterisiert ist, dass sie beim Erhitzen auf Temperaturen, wie sie üblicherweise bei der Calcinierung eingesetzt werden, im Wesentlichen keinen Gewichtsverlust mehr erleidet. Bevorzugt weist die in den erfindungsgemäß eingesetzten Katalysatorteilchen enthaltene katalytisch aktive Masse, sofern vorhanden, gemeinsam mit dem Trägermaterial, einen Gewichtsverlust beim einstündigen Erhitzen auf 300 °C an Luft von höchstens 2,5 Gew.-%, besonders bevorzugt von höchstens 2 Gew.-%, insbesondere bevorzugt von höchstens 1,5 Gew.-%, bezogen auf das Gesamtgewicht der katalytisch aktiven Masse, und sofern vorhanden des Trägers, auf.

Multielementoxidmassen und Verfahren zu ihrer Herstellung sind prinzipiell bekannt und das erfindungsgemäße Verfahren ist nicht auf die Verwendung bestimmter Multimetalloxidmassen beschränkt. Zur Herstellung der katalytisch aktiven Masse geht man üblicherweise von in an sich bekannten geeigneten Quellen der katalytisch aktiven Massen aus und erzeugt aus diesen ein möglichst inniges, vorzugsweise feinteiliges, Trockengemisch, welches dann der Calcinierung unterworfen und gegebenenfalls durch Mahlen in feinteilige Form überführt wird. So geht man zur Bereitstellung von oxidischen Massen beispielsweise von Oxiden selbst oder von solchen Verbindungen aus, die durch Erhitzen, gegebenenfalls in Anwesenheit von Sauerstoff, in Oxide überführbar sind. Geeignete Ausgangsverbindungen sind beispielsweise Halogenide, Nitrate, Formiate, Oxalate, Acetate, Carbonate, Hydroxide, etc. Das innige Vermischen der Ausgangsverbindungen kann in trockener oder in nasser Form erfolgen. Erfolgt es in trockener Form, werden die Ausgangsverbindungen zweckmäßigerweise als feinteilige Pulver eingesetzt und nach Mischen und gegebenenfalls Verpressen der Calcinierung unterworfen. Vorzugsweise erfolgt das innige Vermischen jedoch in nasser Form. Üblicherweise werden die Ausgangsverbindungen dabei in Form einer wässrigen Lösung oder Suspension miteinander vermischt. Anschließend wird die wässrige Masse getrocknet und nach Trocknung calciniert. Vorzugsweise erfolgt der Trocknungsprozess durch Sprühtrocknung. Das dabei anfallende Pulver erweist sich für eine unmittelbare Weiterverarbeitung häufig als zu feinteilig. In diesen Fällen kann es unter Zusatz von Wasser geknetet werden. Die anfallende Knetmasse wird anschließend der Calcinierung unterworfen und danach zu einer feinteiligen oxidischen Aktivmasse gemahlen. Die Calcinationsbedingungen sind dem Fachmann für die verschiedenen möglichen oxidischen Aktivmassen an sich bekannt. Der Calcinierungsvorgang selbst kann dabei ein exothermer oder endothermer Prozess sein.

Im Folgenden werden lediglich beispielhaft einige bevorzugte Stöchiometrien von Multielementoxidmassen für einzelne Gasphasenreaktionen aufgeführt. Als Aktivmasse für Katalysatoren zur heterogen katalysierten partiellen Gasphasenoxidation von Acrolein zu Acrylsäure, von Methacrolein zu Methacrylsäure, von Propen zu Acrolein sowie von tert.-Butanol, Isobutan, Isobuten oder tert.-Butylmethylether zu Methacrolein besonders geeignete Multielementoxidmasse können neben den Elementen Nb und/oder W, sowie Mo, V und Cu zusätzlich z. B. die Elemente Ta, Cr, Ce, Ni, Co, Fe, Mn, Zn, Sb, Bi, Alkali (Li, Na, K, Rb, Cs), H, Erdalkali (Mg, Ca, Sr, Ba), Si, Al, Ti und Zr enthalten. Natürlich kann eine erfindungsgemäß eingesetzte Multielementoxidaktivmasse neben Sauerstoff aber auch nur aus den Elementen Nb und/oder W sowie Mo, V und Cu bestehen.

Als Aktivmasse für Katalysatoren zur Gasphasenoxidation von Acrolein zu Acrylsäure, von Methacrolein zu Methacrylsäure sowie von Propen zu Acrolein eignen sich besonders katalytisch aktive Multielementoxidmassen, die der nachfolgenden allgemeinen Stöchiometrie I genügen:

Mo₁₂VₐX¹_{b}X²_{c}X³_{d}X⁴ₑX⁵_{f}X⁶_{g}Oₙ (I),

in der die Variablen folgende Bedeutung haben:
- X¹ =: W, Nb, Ta, Cr und/oder Ce,
- X² =: Cu, Ni, Co, Fe, Mn und/oder Zn,
- X³ =: Sb und/oder Bi,
- X⁴ =: eines oder mehrere Alkalimetalle (Li, Na, K, Rb, Cs) und/oder H,
- X⁵ =: eines oder mehrere Erdalkalimetalle (Mg, Ca, Sr, Ba),
- X⁶ =: Si, Al, Ti und/oder Zr,
- a =: 1 bis 6,
- b =: 0,2 bis 4,
- c =: 0,5 bis 18,
- d =: 0 bis 40,
- e =: 0 bis 2,
- f =: 0 bis 4,
- g =: 0 bis 40 und
- n =: eine Zahl, die durch die Wertigkeit und Häufigkeit der von Sauerstoff verschiedenen Elemente in I bestimmt wird.

Die Herstellung von aktiven Multimetalloxiden I einschließlich der Calcinationsbedingungen beschreibt z. B. die DE-A 43 35 973. Die DE-A 43 35.973 offenbart auch bevorzugte Ausführungsformen innerhalb der aktiven Multimetalloxide I. Zu diesen zählen beispielsweise jene Multimetalloxide I, die von nachfolgenden Bedeutungen der Variablen der allgemeinen Formel I erfasst werden:
- X¹ =: W, Nb und/oder Cr,
- X² =: Cu, Ni, Co und/oder Fe,
- X³ =: Sb,
- X⁴ =: Na und/oder K,
- X⁵ =: Ca, Sr und/oder Ba,
- X⁶ =: Si, Al und/oder Ti,
- a =: 2,5 bis 5,
- b =: 0,5 bis 2,
- c =: 0,5 bis 3,
- d =: 0 bis 2,
- e =: 0 bis 0,2,
- f =: 0 bis 1,
- g =: 0 bis 15 und
- n =: eine Zahl, die durch die Wertigkeit und Häufigkeit der von Sauerstoff verschiedenen Elemente in I bestimmt wird.

Bevorzugt sind weiterhin die nachfolgenden Multielementoxidaktivmassen II:

Mo₁₂VₐX¹_{b}X²_{c}X⁵_{f}X⁶_{g}Oₙ (II),

in der die Variablen folgende Bedeutung haben:
- X¹ =: W und/oder Nb,
- X² =: Cu und/oder Ni,
- X⁵ =: Co und/oder Sr,
- X⁶ =: Si und/oder Al,
- a =: 3 bis 4,5,
- b =: 1 bis 1,5,
- c =: 0,75 bis 2,5,
- f =: 0 bis 0,5,
- g =: 0 bis 8 und
- n =: eine Zahl, die durch die Wertigkeit und Häufigkeit der von Sauerstoff verschiedenen Elemente in II bestimmt wird.

Weiterhin bevorzugt ist der Einsatz von Multielementoxidmassen der allgemeinen Formel III

M0₁₂BiₐFe_{b}X¹_{c}X²_{d}X³ₑX⁴_{f}Oₙ (III)

in der die Variablen nachfolgende Bedeutung aufweisen:
- X¹: Nickel und/oder Kobalt,
- X²: Thallium, ein Alkalimetall und/oder ein Erdalkalimetall,
- X³: Phosphor, Arsen, Bor, Antimon, Zinn, Cer, Blei, Niob und/oder Wolfram,
- X⁴: Silicium, Aluminium, Titan und/oder Zirkonium,
- a: 0,5 bis 5,
- b: 0,01 bis 3,
- c: 3 bis 10,
- d: 0,02 bis 2,
- e: 0 bis 5,
- f: 0 bis 10 und
- n: eine Zahl, die durch die Wertigkeit und Häufigkeit der von Sauerstoff verschiedenen Elemente zu II bestimmt wird.

Die Herstellung von aktiven Multimetalloxiden III einschließlich der Calcinationsbedingungen beschreibt die DE-A 40 23 239. Mit den aktiven Multimetalloxiden III hergestellte Schalenkatalysatoren eignen sich insbesondere zur gasphasenkatalytisch oxidativen Herstellung von Acrolein aus Propen. Die allgemeinen Reaktionsbedingungen für die gasphasenkatalytische Oxidation von Propen zu Acrolein finden sich ebenfalls in der DE-A 40 23 239 sowie in der DE-A 44 31 957. Die vorgenannten Schalenkatalysatoren der aktiven Multimetalloxide III eigenen sich aber auch zur gasphasenkatalytisch oxidativen Herstellung von Methacrolein aus tert.-Butanol, Isobutan, Isobuten oder tert.-Butylmethylether. Die allgemeinen Reaktionsbedingungen für diese katalytische Gasphasenoxidation finden sich z. B. in der DE-A 40 23 239 und in der DE-A 43 35 172.

Das erfindungsgemäße Verfahren eignet sich prinzipiell zum Befüllen von Reaktoren beliebiger Bauart. Seine vorteilhaften Eigenschaften entwickeln sich insbesondere bei Reaktoren größerer Länge (wie z. B. ab 500 mm), die von der Oberseite unter Ausnutzung der Schwerkraft befüllt werden. Das Gleiche gilt für Reaktoren, die zum Zweck des Befüllens mit ihrer Längsseite im Wesentlichen vertikal ausgerichtet, aber in anderer Ausrichtung (z. B. im Wesentlichen horizontal) betrieben werden. Die in dem erfindungsgemäßen Verfahren eingesetzten Reaktoren weisen vorzugsweise ein Verhältnis von mittlerer Länge in vertikaler Richtung zu mittlerer Länge in horizontaler Richtung von mindestens 1, insbesondere mindestens 2 und speziell mindestens 5 auf. Bevorzugt als Reaktoren sind längliche Hohlkörper, die vorzugsweise einen im Wesentlichen kreisförmigen Querschnitt aufweisen.

Das erfindungsgemäße Verfahren wird vorzugsweise zum Befüllen von Reaktoren eingesetzt, die wenigstens ein Reaktorrohr umfassen. Die Länge der Reaktorrohre liegt dabei vorzugsweise in einem Bereich von etwa 500 bis 20000 mm, besonders bevorzugt von etwa 1000 bis 10000 mm. Der Innendurchmesser der Reaktorrohre liegt vorzugsweise in einem Bereich von etwa 5 bis 100 mm, besonders bevorzugt von etwa 10 bis 50 mm. Vorzugsweise beträgt das Verhältnis der Länge des Reaktorrohrs zu seinem Durchmesser etwa 2 bis 10000, besonders bevorzugt etwa 5 bis 7000.

Das Verfahren eignet sich besonders vorteilhaft zum Befüllen von Reaktoren, die als Rohrbündelreaktor (Vielkontaktrohrreaktor) ausgebildet sind. Eine übliche Bauart derartiger Reaktoren besteht aus einem in der Regel zylinderförmigen Behälter, in welchem eine Vielzahl von Rohren (ein Rohrbündel) in üblicherweise vertikaler Anordnung untergebracht ist. Für den Einsatz in katalytischen Gasphasenreaktionen enthält jedes dieser Rohre (Kontaktrohre) eine Füllung einer katalytisch aktiven Masse oder eines Precursors einer solchen Masse. Üblicherweise sind die Kontaktrohre mit ihren Enden in Rohrböden abdichtend befestigt und münden in je eine am oberen bzw. unteren Ende mit dem Behälter verbundene Haube. Über diese Hauben kann ein die Kontaktrohre durchströmendes Gas, beispielsweise ein sauerstoffhaltiges Gas, beim Trocknen und/oder Calcinieren oder.das Reaktionsgasgemisch zu- bzw. abgeführt werden.

Durch den die Kontaktrohre umgebenden Raum können Wärmeaustauschmittel geleitet werden, um die Kontaktrohre zu erwärmen bzw. Prozesswärme abzuführen. Zweckmäßigerweise weisen Rohrbündelreaktoren wenigstens 5000, vorzugsweise wenigstens 10000 Reaktorrohre auf. In einer üblichen Ausgestaltung beträgt ihre Anzahl beispielsweise 15000 bis 30000. Als Wärmeaustauschmittel eignen sich gasförmige und flüssige Temperiermedien, wie Heißdampf und Salzschmelzen.

Die Katalysatorteilchen weisen im Allgemeinen einen mittleren (größten) Durchmesser von 1 bis 40 mm, vorzugsweise 2 bis 30 mm, insbesondere 3 bis 20 mm, auf. Geeignete Vollkatalysatoren bestehen aus einer katalytisch aktiven Masse, die - gegebenenfalls unter Verwendung geeigneter Bindemittel - durch Strangpressen, Tablettieren, Extrudieren oder andere Verfahren zu Formkörpern, wie Strangpresslingen, Tabletten oder dergleichen geformt ist. Dazu können der katalytisch aktiven Masse übliche Hilfsmittel, z.B. Gleitmittel, wie Graphit oder Fettsäuren (wie Stearinsäure), und/oder Formhilfsmittel und Verstärkungsmittel, wie Fasern aus Glas, Asbest, Siliciumcarbid oder Kaliumtitanat, zugesetzt werden. Weiterhin kann der Masse vor oder nach der Formgebung eine flüssige Substanz oder eine eine solche Substanz enthaltende Zusammensetzung, wie zuvor beschrieben, zugesetzt werden.

Bevorzugt eignet sich das erfindungsgemäße Verfahren zum Befüllen von Reaktoren mit Schalenkatalysatoren. Schalenkatalysatoren umfassen eine schalenförmig auf einen Träger aufgebrachte katalytische Masse. Sie können in Form von Kugeln, Ringen, Zylindern, Würfeln, Quadern oder anderen geometrischen Körpern vorliegen.

Die Trägermaterialien sind vorzugsweise chemisch inert, d. h. sie greifen in den Ablauf der Gasphasenreaktion, die durch die eingesetzten Schalenkatalysatoren katalysiert wird, im Wesentlichen nicht ein. Als Materialien für die teilchenförmigen Träger (Trägerkörper) kommen insbesondere Aluminiumoxid, Siliciumdioxid, Silicate wie Ton, Kaolin, Steatit, Bims, Aluminiumsilicat und Magnesiumsilicat, Siliciumcarbid, Zirkondioxid und Thoriumdioxid in Betracht. Ein geeigneter kommerziell erhältlicher Träger ist Steatit C 220 der Fa. CeramTec.

Mit Vorteil ist die Oberfläche des Trägerkörpers rau, da eine erhöhte Oberflächenrauhigkeit in der Regel eine erhöhte Haftfestigkeit der aufgebrachten Schale an oxidischer Aktivmasse bedingt. Vorzugsweise liegt die Oberflächenrauhigkeit R_{z} des Trägerkörpers im Bereich von 30 bzw. 40 bis 200 µm, vorzugsweise 30 bzw. 40 bis 100 µm (bestimmt gemäß DIN 4768 Blatt 1 mit einem "Hommel Tester für DIN-ISO Oberflächenmessgrößen" der Fa. Hommelwerke). Die genannte Oberflächenrauhigkeit ist insbesondere bei Verwendung von Trägern aus Steatit C 220 der Fa. CeramTec bevorzugt. Die Trägermaterialien können porös oder unporös sein. Vorzugsweise ist das Trägermaterial unporös (Gesamtvolumen der Poren auf das Volumen des Trägerkörpers bezogen < 1 Vol.-%).

Prinzipiell kommen für das erfindungsgemäße Verfahren beliebige Geometrien der Trägerkörper in Betracht. Ihre Längsausdehnung beträgt in der Regel 1 bis 10 mm. Vorzugsweise werden jedoch Kugeln oder Zylinder, insbesondere Hohlzylinder, als Trägerkörper angewendet.

Werden Kugeln als Trägerkörper verwendet, so beträgt deren Durchmesser im Allgemeinen 1 bis 10 mm, insbesondere 3 bis 8 mm.

Werden Zylinder als Trägerkörper verwendet, so beträgt deren Länge vorzugsweise 2 bis 10 mm und ihr Außendurchmesser bevorzugt 4 bis 10 mm. Im Fall von Ringen liegt die Wanddicke darüber hinaus üblicherweise bei 1 bis 4 mm. Besonders bevorzugte ringförmige Trägerkörper besitzen eine Länge von 3 bis 6 mm, einen Außendurchmesser von 4 bis 8 mm und eine Wanddicke von 1 bis 2 mm. Ganz besonders bevorzugt sind Ringe der Geometrie 7 mm x 3 mm x 4 mm (Außendurchmesser x Länge x Innendurchmesser).

Die Dicke der auf den Trägerkörper aufgebrachten katalytisch aktiven Masse oder des Precursors liegt zweckmäßigerweise in der Regel bei 10 bis 1000 µm. Bevorzugt sind, insbesondere bei ringförmigen Trägerkörpern, 10 bis 500 µm, besonders bevorzugt 100 bis 500 µm und ganz besonders bevorzugt 200 bis 300 µm.

Die Herstellung der Katalysatorteilchen kann nach bekannten Verfahren erfolgen. Vorzugsweise wird dabei ein Bindemittel eingesetzt, das eine wie zuvor definierte flüssige Substanz aufweist, und auf Trocknungsschritte, die zu einer vollständigen oder im Wesentlichen vollständigen Entfernung der flüssigen Substanz führen, verzichtet. Eine partielle Trocknung kann beispielsweise durch Erwärmen auf eine Temperatur von nicht mehr als 150 °C, vorzugsweise nicht mehr als 120 °C, erfolgen. Zur Trocknung kann zusätzlich ein Gasstrom an den Teilchen vorbeigeleitet werden. Vorzugsweise beträgt die Trocknungsdauer nicht mehr als 60 Minuten, besonders bevorzugt nicht mehr als 30 Minuten.

Katalysatorteilchen, die eine wie vorstehend beschriebene flüssige Substanz, z. B. in assoziierte Form enthalten, zeichnen sich durch eine gute Beständigkeit gegenüber mechanischen Belastungen aus. Diese übertrifft im Allgemeinen die mechanische Beständigkeit von Katalysatorteilchen, die nach dem gleichen Herstellungsverfahren erhalten, aber zusätzlich einem Trocknungsschritt zur im Wesentlichen vollständigen Entfernung von flüssigen Substanzen unterzogen werden.

Ein Maß für die mechanische Beständigkeit der bereitgestellten Katalysatorteilchen ist der folgende Falltest: Dazu wird eine 20 g-Portion Katalysator durch ein 3,5 m langes Rohr (Material: RST 37.8) mit lichtem Durchmesser von 25 mm fallengelassen. Der Katalysator fällt in eine an das untere Rohrende nahtlos anschließende Schale aus Porzellan und wird für den dreimaligen Falltest von dem bei dem Aufschlag entstehenden Staub abgetrennt und wieder durch das Rohr fallengelassen. Der Gesamtmassenverlust nach einmaligem bzw. mehrmaligem Falltest ist ein Maß für die Abriebfestigkeit des Katalysators.

Vorzugsweise weisen die bereitgestellten Katalysatorteilchen beim Falltest eine Gewichtsabnahme von höchstens 0,8 Gew.-%, besonders bevorzugt von höchstens 0,7 Gew.%, insbesondere von höchstens 0,6 Gew.% auf. Bevorzugt weist ein erfindungsgemäß eingesetzter Katalysator gegenüber einem Katalysator gleicher Zusammensetzung jedoch ohne Flüssigkeit eine Verminderung der Gewichtsabnahme beim einmaligen Falltest (um den Faktor) von mindestens 0,9 Gew.-%, besonders bevorzugt mindestens 5 Gew.-%, insbesondere mindestens 10 Gew.% auf. Bevorzugt weisen die bereitgestellten Katalysatorteilchen bei dreimaliger Wiederholung des Falltests mit denselben Teilchen eine Gewichtsabnahme von höchstens 3 Gew.-%, besonders bevorzugt von höchstens 2,5 Gew.-%, insbesondere höchstens 2 Gew.-% auf. Vorzugsweise kann die Gewichtsabnahme gegenüber einem Katalysator gleicher Zusammensetzung jedoch ohne Flüssigkeit um (den Faktor von) mindestens 3 Gew.%, besonders bevorzugt mindestens 15 Gew.-%, insbesondere mindestens 30 Gew.-% verringert werden.

Die nach dem erfindungsgemäßen Verfahren erhaltenen Katalysatorfüllungen weisen im getrockneten Zustand eine weniger dicht gepackte, lockere Schüttung mit geringerem Schüttgewicht auf. Durch das erfindungsgemäße Verfahren werden befüllte Reaktoren erhalten, die beim Betrieb einen geringen Druckverlust aufweisen als Reaktoren, die mit trockenen Katalysatorteilchen befüllt wurden.

Unabhängig von der Art und Zusammensetzung des katalytisch aktiven Materials kann die Bereitstellung von Schalenkatalysatorteilchen prinzipiell erfolgen, indem man den Träger mit einem flüssigen Bindemittel und der katalytisch aktiven Masse in Kontakt bringt, dabei eine Schicht der Masse auf dem Träger aufbringt, und anschließend gegebenenfalls das Bindemittel teilweise entfernt. Dabei wird zur Bereitstellung der Katalysatorteilchen das katalytisch aktive Material bereits in seiner fertigen katalytisch aktiven Form, beispielsweise als calciniertes Mischoxid, aufgebracht. Für die Bereitstellung der Katalysatorteilchen im technischen Maßstab empfiehlt sich beispielsweise die Anwendung des in der DE-A-29 09 671 offenbarten Verfahrensprinzips, wobei gegebenenfalls anstelle von Wasser ein anderes, wie zuvor definiertes, flüssiges Bindemittel angewendet wird. Eine bevorzugte Ausführungsform dieser Verfahrensvariante ist in der EP-A-714 700 beschrieben. Danach wird der Träger zunächst mit dem flüssigen Bindemittel befeuchtet, dann durch Inkontaktbringen mit trockener, feinteiliger, aktiver Katalysatormasse an der Oberfläche des befeuchteten Trägerkörpers eine Schicht aktiver Katalysatormasse angeheftet und anschließend gegebenenfalls das flüssige Bindemittel teilweise entfernt. In einer speziellen Ausführung werden die Schritte des Befeuchtens des Trägers, Inkontaktbringens mit der Katalysatormasse und Entfernen des flüssigen Bindemittels ein- oder mehrfach wiederholt, bis die gewünschte Schichtdicke des Schalenkatalysators erreicht ist. Bis auf die letzte Wiederholung kann Dabei das flüssige Bindemittel jeweils vollständig entfernt werden.

In einer bevorzugten Ausführung werden die zu beschichtenden Trägerkörper in einen, vorzugsweise geneigten (der Neigungswinkel beträgt in der Regel 30 bis 90°), rotierenden Drehbehälter (z. B. Drehteller oder Dragierkessel) gefüllt. Der rotierende Drehbehälter führt die insbesondere kugelförmigen oder zylindrischen, vor allem hohlzylindrischen, Trägerkörper unter zwei in bestimmtem Abstand aufeinanderfolgend angeordneten Dosiervorrichtungen hindurch. Die erste der beiden Dosiervorrichtungen entspricht zweckmäßig einer Düse, durch die die im rotierenden Drehteller rollenden Trägerkörper mit dem erfindungsgemäß zu verwendenden flüssigen Bindemittel besprüht und kontrolliert befeuchtet werden. Die zweite Dosiervorrichtung befindet sich außerhalb des Zerstäubungskegels des eingesprühten flüssigen Bindemittels und dient dazu, die feinteilige Aktivmasse zuzuführen (z. B. über eine Schüttelrinne oder eine Förderschnecke). Die kontrolliert befeuchteten Trägerkörper nehmen das zugeführte Pulver auf, das sich durch die rollende Bewegung auf der äußeren Oberfläche der zylinder- oder kugelförmigen Trägerkörper zu einer zusammenhängenden Schale verdichtet. (Im inneren Kreis eines hohlzylindrischen Trägerkörpers findet eine solche verdichtende Bewegung nicht statt, weshalb dieser im Wesentlichen unbeschichtet bleibt. Dies kann jedoch beispielsweise durch Anwendung eines Maischebeschichtungsverfahrens, z. B. unter Einsatz eines Ultracoaters der Fa. Aeromatic Fielder, CH, vermieden werden.).

Bei Bedarf durchläuft der so grundbeschichtete Trägerkörper im Verlauf der darauffolgenden Umdrehung wiederum die Sprühdüse, wird dabei kontrolliert befeuchtet, um im Verlauf der Weiterbewegung eine weitere Schicht feinteiliger Aktivmasse aufnehmen zu können usw. (eine Zwischentrocknung ist in der Regel nicht erforderlich). Ein besonderer Vorzug der vorstehend beschriebenen Ausführungsform besteht darin, dass in einem Arbeitsgang Schalenkatalysatoren mit schichtförmig aus zwei oder mehr unterschiedlichen aktiven Massen bestehenden Schalen hergestellt werden können.

Vorteilhaft bei der zuvor beschriebenen Ausführungsform zur Bereitstellung der in den Reaktor einzufüllenden Katalysatorteilchen ist, dass die Befeuchtung der zu beschichteten Oberfläche des Trägerkörpers und der erhaltenen Schalenkatalysatoren in kontrollierter Weise vorgenommen wird. Zweckmäßigerweise wird die Trägeroberfläche dabei so befeuchtet, dass diese zwar flüssiges Bindemittel adsorbiert aufweist, aber auf der Trägeroberfläche bzw. den aufgetragenen Schichten keine Flüssigphase als solche visuell in Erscheinung tritt. Nach dieser Ausführungsform ist es möglich, Katalysatorteilchen bereitzustellen, die eine genau bestimmte Menge an flüssigem assoziiertem Bindemittel enthalten. Die maximale Flüssigmenge entspricht dabei dem maximalen Sättigungsgrad der Katalysatorteilchen. Für das erfindungsgemäße Verfahren ist es selbstverständlich auch möglich, wie bereits erwähnt, zur Bereitstellung der Katalysatorteilchen nach beliebigen Verfahren erhaltene Katalysatorteilchen mit einer flüssigen Substanz in Kontakt zu bringen und anschließend den Reaktor damit zu befüllen.

Vorzugsweise weisen der Reaktor und die Katalysatorteilchen beim Befüllen eine Temperatur von höchstens 40 °C und insbesondere von höchstens 30 °C auf. In einer bevorzugten Ausführung erfolgt das Befüllen des Reaktors bei der jeweils herrschenden Umgebungstemperatur.

Das Befüllen des Reaktors mit den Katalysatorteilchen erfolgt allgemein, indem man sie in eine Öffnung an der Oberseite des Reaktors gibt und unter Einwirkung der Schwerkraft in den Reaktor einträgt. Das Einfüllen der Katalysatorteilchen in den Reaktor erfolgt dabei vorzugsweise mit im Wesentlichen konstanter Geschwindigkeit, insbesondere mittels geeigneter Füllmaschinen. Beim Befüllen von Rohrbündelreaktoren kommen vorzugsweise Füllmaschinen zum Einsatz, die zum gleichzeitigen Befüllen mehrerer Rohre geeignet sind. Diese weisen beispielsweise einen Fülltrichter mit mehreren Kammern auf, aus denen die Katalysatorteilchen auf eine geneigte Schüttelrinne ausgestoßen werden. Wird die Schüttelrinne in Vibration gesetzt, gleiten die Katalysatorteilchen gleichmäßig über die Rinne und fallen über Aussparungen in der Rinne in die darunter liegenden Rohre. Geeignete Vorrichtungen zum Einfüllen von Katalysatorteilchen in Rohrreaktoren sind in der DE-A-25 11 411, DE-A-28 49 664, EP-A-041 144, DE-A-199 34 324 und DE-A-102 50 022 beschrieben. Auf die Offenbarung dieser Dokumente wird hier Bezug genommen. Besonders vorteilhaft ist der Einsatz der in der DE-A-199 34 324 beschriebenen Vorrichtung zum Einfüllen von Schüttgut in Rohre, die eine Anzahl von Vorratsbehältern, die das Schüttgut aufnehmen und unterhalb der Vorratsbehälter vorgesehene Förderrinnen aufweist, in denen das Schüttgut in Vibration versetzt und zu einer Austragsstelle gefördert wird, wobei die in die Förderrinne eintretende Fördermenge dosierbar ist. Mit Vorteil kann weiterhin die in der DE-A-102 50 022 beschriebene Beladevorrichtung eingesetzt werden, die aus einer Vielzahl von Beladeelementen besteht und sich daher besonders für Rohrbündelreaktoren mit einer Vielzahl von Reaktorrohren eignet.

Vorzugsweise ermöglicht das erfindungsgemäße Verfahren auf Füllhilfen im Reaktor, die zu einer Verlangsamung der Fallgeschwindigkeit der Katalysatorteilchen führen, zu verzichten.

Nach einer bevorzugten Ausführung wird der befüllte Reaktor vor seinem Einsatz in katalytischen Gasphasenreaktionen zunächst einer Behandlung zur Entfernung wenigstens eines Teils der flüssigen Substanz sowie gegebenenfalls weiterer flüchtiger Bestandteile, z. B. weiterer Bindemittelkomponenten, unterzogen. Dies kann beispielsweise durch Erwärmen auf eine erhöhte Temperatur (häufig 50 bis 220 °C) und/oder Durchleiten eines Gasstroms erfolgen. Im einfachsten Fall erfolgt die Entfernung der flüssigen Substanz sowie gegebenenfalls weiterer Komponenten durch Einwirkung heißer Gase entsprechender Temperatur. Als Gas wird im Allgemeinen einen sauerstoffhaltiges Gas, insbesondere Luftsauerstoff, eingesetzt. Die Temperatur sollte dabei in der Regel nicht oberhalb der zur Herstellung der oxidischen Aktivmasse angewendeten Calcinationstemperatur liegen. In der Regel ist ein solches Erwärmen des Reaktors auf erhöhte Temperaturen unterhalb der Calcinationstemperatur ausreichend, da sich Wasser und die meisten organischen Lösungsmittel sowie auch zahlreiche organische Bindemittelkomponenten an den als Katalysator eingesetzten oxidischen Massen und im Beisein von Luftsauerstoff zu gasförmigen Bestandteilen, wie Ameisensäure, Essigsäure, H₂O, CO₂ oder CO zersetzen. Somit ist es in der Regel möglich, die thermische Behandlung zur Entfernung der flüssigen Substanz sowie gegebenenfalls weiterer Komponenten so durchzuführen, dass der Abgasstrom aus dem Reaktor ohne Nachbehandlung in die Atmosphäre geleitet werden kann.

In einer typischen Ausgestaltung wird der nach dem erfindungsgemäßen Verfahren befüllte Reaktor in einer Produktionsanlage, z. B. zur gasphasenkatalytischen Oxidation von Acrolein zu Acrylsäure, eingesetzt. Derartige Produktionsanlagen bestehen in der Regel aus einer oder mehreren parallel geschalteten Produktionsstraßen. Jede Produktionsstraße kann ihrerseits von einem oder mehreren in Reihe geschalteten Reaktoren gebildet werden. Die Produkte der katalytischen Gasphasenreaktion einer jeden Reaktionsstraße können separat oder gemeinsam aufgearbeitet werden, z. B. durch übliche, dem Fachmann bekannten Trennungs- und Reinigungsverfahren. Zur effektiven Nutzung der Aufarbeitungsanlagen, z. B. der dafür üblichen Destillationskolonnen, werden vielfach die Produktströme aus zwei, drei oder mehr als drei Produktionsstraßen einer gemeinsamen Aufarbeitung zugeführt. Das erfindungsgemäße Verfahren eignet sich in besonders vorteilhafter Weise zum effektiven Betrieb einer Produktionsanlage aus zwei, drei oder mehr als drei parallel geschalteten Produktionsstraßen, wobei für den nach einer gewissen Katalysatorstandzeit erforderlichen Tausch der Katalysatorfüllung jeweils nur eine einzelne Straße abgeschaltet wird und die Produktion in den übrigen Straßen weiterläuft. Durch die mit dem erfindungsgemäßen Verfahren mögliche schnelle und dennoch gleichmäßige Befüllung der Reaktoren unter Vermeidung von Katalysatorbruch und/oder -abrieb, kann der Produktionsausfall auf ein Minimum beschränkt werden.

In einer geeigneten Ausführung wird der frisch befüllte Reaktor bzw. die in Reihe geschalteten Reaktoren einer Produktionsstraße zunächst zum Entfernen der flüssigen Substanz und gegebenenfalls weiterer Bindemittelkomponenten mit einem erhitzen Gas, in der Regel Luft, das durch den Reaktor geführt wird, erwärmt und gleichzeitig die flüchtigen Komponenten aus dem Reaktor entfernt. Die eingesetzte Gasmenge liegt beispielsweise in einem Bereich von etwa 0,8 bis 1,2 Nm³/h Rohr. Die aus dem Reaktor austretende Abluft kann, wie zuvor ausgeführt, in der Regel in die Atmosphäre geleitet werden. Vorzugsweise wird zur thermischen Behandlung des Reaktors ein Temperaturgradient eingesetzt, um den Reaktor und die Füllung keiner zu großen Belastung durch eine kurzfristige starke Erhitzung auszusetzen. Vorzugsweise beträgt die Aufheizgeschwindigkeit nicht mehr als 10 °C pro Stunde. So kann beispielsweise der Reaktor zunächst mit erwärmter Luft einer Temperatur unterhalb von 100 °C, wie z. B. in einem Bereich von 50 bis 90 °C, erwärmt werden. In der Regel soll die Temperaturdifferenz zwischen Reaktoreinlass und Reaktorauslass (jeweils gemessen im Gaseinlass und Gasauslass) nicht mehr als 120 °C, bevorzugt nicht mehr als 90 °C, betragen. Das Erwärmen der Gase kann über übliche Vorrichtungen, beispielsweise über einen Gasverdichter oder über dampfgespeiste Wärmetauscher, erfolgen. Sobald der Reaktor eine ausreichende Temperatur erreicht hat, kann eine weitere zusätzliche Erwärmung über die üblicherweise die Kontaktrohre umgebenden Wärmeaustauschmittel, wie z. B. Salzschmelzen, erfolgen. Diese Erwärmung kann elektrisch erfolgen, z. B. über in das Wärmemedium eingebrachte Heizelemente. Bei der weiteren Aufheizung kann anstelle von Luft auch ein anderes Gas, vorzugsweise sauerstoffabgereicherte Luft, durch den Reaktor strömen. Um eine vollständige Entfernung der flüssigen Substanz und gegebenenfalls weiterer Bindemittelkomponenten sicherzustellen, wird der Reaktor für eine ausreichend lange Zeit, wie etwa 12 bis 72 Stunden, auf eine ausreichend hohe Temperatur, wie etwa 160 bis 220 °C, erwärmt. Sobald am Ausgang des Reaktors im Wesentlichen keine flüssigen Substanzen oder Bindemittelkomponenten oder Zersetzungsprodukte davon festgestellt werden, kann der Reaktor bzw. die Produktionsstraße wieder in den Reaktionskreislauf eingebunden, auf die nötige Anfangstemperatur aufgeheizt und mit Eduktgas beaufschlagt werden.

Ein weiterer Gegenstand der Erfindung sind die durch das zuvor beschriebene Verfahren erhältlichen, mit Katalysatorteilchen befüllten Reaktoren.

Diese Reaktoren eignen sich auf Grund ihrer zuvor beschriebenen vorteilhaften Packungseigenschaften ausgezeichnet zur Durchführung von katalytischen Gasphasenreaktionen.

Gegenstand der Erfindung ist auch die Verwendung eines erfindungsgemäßen Reaktors zur Durchführung von katalytischen Gasphasenreaktionen, insbesondere zur Herstellung ungesättigter aliphatischer Carbonsäuren oder Aldehyde durch Gasphasenoxidation von Aldehyden, Alkanen oder Alkenen; zur Herstellung von Nitrilen durch Ammoxidation von Alkanen oder Alkenen; zur Herstellung aromatischer Carbonsäuren oder -anhydriden durch Gasphasenoxidation aromatischer Kohlenwasserstoffe; für Epoxidierungen sowie für Hydrierungen.

In einer bevorzugten Ausführungsform werden erfindungsgemäßen Reaktoren nach dem Befüllen zur Herstellung von Acrylsäure durch gasphasenkatalysierte Oxidation von Acrolein eingesetzt. Dabei erfolgt die Umsetzung zumindest teilweise, insbesondere vollständig, in einem Reaktor, wie zuvor definiert. Zur gasphasenkatalytisch oxidativen Herstellung von Acrylsäure aus Acrolein geeignete Multimetalloxide wurden bereits eingangs erwähnt und sind allgemein bekannt. Die Reaktionsbedingungen für die gasphasenkatalytische Oxidation von Acrolein zu Acrylsäure ist beispielsweise in der DE-A-43 35 973 beschrieben. Die erfindungsgemäßen Katalysatoren eignen sich auch für einen Einsatz zur Herstellung von Acrylsäure in einem Vielkontaktrohr-Festbettreaktor, durch dessen die Kontaktrohre umgebenden Raum ein Wärmeaustauschmittelkreislauf geleitet wird, wie es in der DE-A-44 31 949 beschrieben ist.

Zur Herstellung von Acrylsäure durch gasphasenkatalytische Oxidation von Acrolein kann Acrolein eingesetzt werden, das seinerseits durch katalytische Gasphasenpartialoxidation von Propen erzeugt wurde. Auch dazu kann ein erfindungsgemäß befüllter Reaktor eingesetzt werden. In der Regel können die Acrolein enthaltenden Reaktionsgase dieser Propenoxidation ohne Zwischenreinigung zur Herstellung von Acrylsäure eingesetzt werden. Dazu kann gegebenenfalls eine Abkühlung der Reaktionsgase zwischen den Reaktionsstufen durchgeführt werden.

Als Oxidationsmittel für die Oxidation von Acrolein zu Acrylsäure (wie auch von Propen zu Acrolein) wird vorzugsweise Sauerstoff, zweckmäßigerweise mit inerten Gasen, verdünnt, z. B. in Form von Luft oder vorzugsweise so genannter Magerluft (mit einem geringeren Sauerstoffgehalt als Luft), eingesetzt. Geeignete Oxidationsmittel sind auch Sauerstoff in gebundener Form enthaltende Gase, wie N₂O. Geeignete Verdünnungsgase sind z. B. N₂, CO₂, Kohlenwasserstoffe, rückgeführte Reaktionsabgase aus der Acrylsäure- oder Acroleinherstellung und/oder Wasserdampf. In einer geeigneten Ausführung wird zur Acroleinpartialoxidation ein Acrolein : Sauerstoff: Wasserdampf : Inertgas-Volumenverhältnis von 1 : (1 - 3) : (0 - 20) : (3 - 30), vorzugsweise 1 : (1 - 3) : (0,5 - 10) : (7 - 18) eingestellt. Der Reaktionsdruck beträgt im Allgemeinen etwa 1 bis 3 bar, und die Gesamtraumbelastung beträgt vorzugsweise 1000 bis 4000 NI/I/h. Die Reaktionstemperatur liegt üblicherweise in einem Bereich von etwa 230 bis 330 °C. In einer geeigneten Ausführungsform erfolgt die Herstellung von Acrylsäure durch gasphasenkatalytische Oxidation in einer Produktionsanlage aus einer oder mehreren Produktionsstraßen, wie zuvor beschrieben. Dann kann ein nach dem erfindungsgemäßen Verfahren befüllter und im heißen Luftstrom ausgeheizter Reaktor wieder in die Produktionsanlage eingebunden werden. Hierzu kann es erforderlich sein, die Produktion in den übrigen Straßen kurz zu unterbrechen. Bei der Einbindung in die Produktion wird die neu gefüllte Produktionsstraße wieder gasseitig mit der Aufarbeitungsvorrichtung verbunden, der Luftstrom auf das zur Acrylsäureherstellung eingesetzte Sauerstoff:Inertgas-Verhältnis eingestellt und anschließend Acrolein dem in den Reaktor einströmenden Gasstrom beigemengt.

Die nach dem erfindungsgemäßen Verfahren befüllten Katalysatoren eignen sich insbesondere auch zur gasphasenkatalytischen oxidativen Herstellung von Acrolein aus Propen. Die allgemeinen Reaktionsbedingungen für die gasphasenkatalytische Oxidation von Propen zu Acrolein finden sich z. B. in der DE-A-40 23 239 sowie in der DE-A-44 31 957, auf die hier Bezug genommen wird.

Die nach dem erfindungsgemäßen Verfahren befüllten Katalysatoren eignen sich auch zur gasphasenkatalytisch oxidativen Herstellung von Methacrolein aus tert.-Butanol, iso-Butanol, iso-Buten oder tert.-Butylmethylether. Die allgemeinen Reaktionsbedingungen für diese katalytische Gasphasenoxidation findet sich z. B. in der DE-A-40 23 239 und in der DE-A-43 35 172.

Die nach dem erfindungsgemäßen Verfahren befüllten Katalysatoren eignen sich weiterhin für die partielle Oxidation von aromatischen Kohlenwasserstoffen zu Carbonsäuren und/oder Carbonsäureanhydriden. Als Edukt einsetzbare aromatische Kohlenwasserstoffe sind z. B. Benzol, Toluol, die Xylol-Isomeren, Naphthalin, etc. Dabei werden beispielsweise Benzoesäure, Maleinsäureanhydrid, Phthalsäureanhydrid, Isophthalsäure, Terephthalsäure oder Pyromellithsäureanhydrid gewonnen. Großtechnisch besonders bedeutsam ist die Gasphasenpartialoxidation von o-Xylol zu Phthalsäureanhydrid.

Zur Gasphasenoxidation von aromatischen Kohlenwasserstoffen zu Carbonsäuren und/oder Carbonsäureanhydriden werden vorzugsweise Katalysatoren eingesetzt, die in ihrer katalytisch aktiven Masse Titandioxid, vorzugsweise in der Anastasmodifikation, oxidische Verbindungen des Vanadiums, insbesondere Vanadiumpentoxid (V₂O₅), sowie gegebenenfalls oxidische Promotoren, z. B. auf Basis von Alkalimetallen, Erdalkalimetallen, TI, Al, Zr, Fe, Ni, Co, Mn, Sn, Ag, Cu, Cr, Mo, W, Ir, Ta, Ni, As, Ce und/oder P enthalten. Bevorzugt werden zur Gasphasenoxidation von aromatischen Kohlenwasserstoffen Schalenkatalysatoren eingesetzt. Geeignete Katalysatorzusammensetzungen und Verfahren zu ihrer Herstellung sind z. B. in DE-A-25 46 268, EP-A-286 448, DE-A-25 47 624, EP-A-163 231, DE-A-28 30 765 und WO 98/37967 beschrieben.

Zur Gasphasenoxidation wird ein molekularen Sauerstoff enthaltendes Reaktionsgas eingesetzt. Das Reaktionsgase können neben Sauerstoff noch geeignete Reaktionsmoderatoren und/oder Verdünnungsmittel, wie Dampf, Kohlendioxid und/oder Stickstoff, enthalten. Vorzugsweise enthält das Reaktionsgas im Allgemeinen 1 bis 100 mol%, besonders bevorzugt 2 bis 50 mol-%, insbesondere 10 bis 30 mol-% Sauerstoff. Zusätzlich kann das Gas bis zu 30 mol%, vorzugsweise bis zu 10 mol-%, Wasserdampf sowie 0 bis 50 mol-%, vorzugsweise 0 bis 1 mol-% Kohlendioxid enthalten. Die Differenzmenge zu 100 mol-% kann Stickstoff sein. Das dem Reaktor zugeführte Reaktionsgas enthält z. B. 5 g bis 120 g je Nm³ Gas, vorzugsweise 60 bis 120 g/Nm³ Gas und insbesondere 80 bis 115 g/Nm³ Gas des zu oxidierenden aromatischen Kohlenwasserstoffs.

Die Reaktionstemperatur liegt im Allgemeinen bei 300 bis 450 °C, vorzugsweise 320 bis 420 °C und insbesondere 340 bis 400 °C. Üblicherweise wird die Reaktion bei einem Überdruck von im Allgemeinen 0,1 bis 2,5 bar, vorzugsweise 0,3 bis 1,5 bar durchgeführt. Die Raumgeschwindigkeit liegt im Allgemeinen bei 750 bis 5000 h⁻¹.

Die Gasphasenoxidation kann bei einer einheitlichen Reaktionstemperatur oder in einem Reaktor mit Aufteilung in Temperaturzonen durchgeführt werden. Dazu werden zwei oder mehr als zwei Zonen der im Reaktionsrohr befindlichen Katalysatorschüttung auf unterschiedliche Reaktionstemperaturen thermostatisiert. Dazu eignen sich beispielsweise Reaktoren mit getrennten Salzbädern, wie sie in der DE-A-22 01 528 oder DE-A-28 30 765 beschrieben sind. Wird die Umsetzung in zwei Reaktionszonen durchgeführt, wie in der DE-A-40 13 051 beschrieben, wird im Allgemeinen die zum Gaseintritt des Reaktionsgases hin gelegene Reaktionszone, welche im Allgemeinen 30 bis 80 Vol.-% des gesamten Katalysatorvolumens umfasst, auf eine um 1 bis 20 °C, vorzugsweise um 1 bis 10 °C und insbesondere um 2 bis 8 °C höhere Reaktionstemperatur als die zum Gasaustritt hingelegene Reaktionszone thermostatisiert. Eine solche Arbeitsweise wird als Zwei- oder Mehrzonenstrukturierung des Reaktors bezeichnet.

Auf analoge Weise kann bei der Oxidation von Toluol zu Benzoesäure verfahren werden, wobei zunächst ein Gemisch aus nicht umgesetztem Toluol, Benzoesäure und Benzaldehyd entsteht. Alternativ kann gewünschtenfalls auch das Nebenprodukt Benzaldehyd isoliert werden.

Die nach dem erfindungsgemäßen Verfahren durchgeführte Katalysatorbefüllung eignet sich insbesondere auch für die Durchführung eines Katalysatorteilwechsels gemäß WO 2004009525 A1. Nach durchgeführtem Teilwechsel erfolgt die Entfernung der flüssigen Substanz und gegebenenfalls weiterer Bindemittel entsprechend dem zuvor beschriebenen erfindungsgemäßen Verfahren, ohne dass es zu einer Beeinträchtigung der Qualität des vom Teilwechsel nicht betroffenen bereits vor dem Wechsel im Reaktor enthaltenen Restkatalysatorbetts kommt.

Die Erfindung wird anhand der folgenden, nicht einschränkenden Beispiele näher erläutert.

### Beispiele

### I) Herstellung von Schalenkatalysatoren

### Beispiel 1 (Vergleich):

Eine Vorläufermasse zur Herstellung einer Multielementoxidmasse der Stöchiometrie Mo₁₂V₃W_{1,2}Cu_{2,4}Oₓ wurde hergestellt wie in Beispiel A) der DE-A-103 60 057 beschrieben und daraus eine katalytische Aktivmasse durch thermische Behandlung in einer Drehrohrofenvorrichtung erzeugt, wie in Beispiel B) dieses Dokuments beschrieben. Das so erhaltene katalytisch aktive Material wurde mittels einer Biplexquerstromsichtmühle (BQ 500) (Fa. Hosokawa-Alpine Augsburg) zu einem feinteiligen Pulver gemahlen, von dem 50 % der Pulverpartikel ein Sieb der Maschenweite 1 bis 10 µm passierten und dessen Anteil an Partikeln mit einer Längstausdehnung oberhalb von 50 µm weniger als 1 % betrug.

28 kg ringförmiger Trägerkörper (7 mm Außendurchmesser, 3 mm Länge, 4 mm Innendurchmesser, Steatit, mit einer Oberflächenrauhigkeit R_{z} von 45 µm und mit einem auf das Volumen der Trägerkörper bezogenen Porengesamtvolumen < 1 Vol.-%, Hersteller: Hoechst Ceramtec, DE) wurden in einem Dragierkessel (Neigungswinkel 90°; Hicoater der Fa. Lödige, DE) von 200 I Innenvolumen gefüllt. Anschließend wurde der Dragierkessel mit 16 U/min in Rotation versetzt. Über eine Düse (Typ Schlick, 0,5 mm, 90°) wurden innerhalb von 25 min 2000 g einer aus 75 Gew.-% Wasser und 25 Gew.-% Glycerin bestehenden Lösung auf die Trägerkörper aufgesprüht. Gleichzeitig wurden im selben Zeitraum 10,35 kg des katalytisch aktiven Material über eine Schüttelrinne außerhalb des Sprühkegels der Zerstäuberdüse kontinuierlich zudosiert. Während der Beschichtung wurde das zugeführte Pulver vollständig auf die Oberfläche der Trägerkörper aufgenommen, eine Agglomeration der feinteiligen oxidischen Aktivmasse wurde nicht beobachtet. Nach beendeter Zugabe von Pulver und Bindemittel wurde bei einer Drehgeschwindigkeit von 2 U/min 20 min 110 °C heiße Luft in den Dragierkessel geblasen. Anschließend wurde noch 2 h bei 250 °C in ruhender Schüttung (Hordenofen) unter Luft getrocknet.

### Beispiel 2 (erfindungsgemäß):

Es wurde wie in Beispiel 1 verfahren, wobei jedoch auf die Trocknung für 2 h bei 250 °C im Hordenofen verzichtet wurde.

### Beispiel 3 (Vergleich)

Eine Vorläufermasse zur Herstellung einer Multielementoxidmasse der Stöchiometrie (Mo₁₂V_{3,46}W_{1,39})_{0,87} (CuMo_{0,5}W_{0,5}O₄)_{0,4} (CuSb₂O₆)_{0,4} wurde hergestellt wie in Beispiel 5.) der DE-A-103 60 058 beschrieben und daraus eine katalytische Aktivmasse durch thermische Behandlung in einer Drehrohrofenvorrichtung erzeugt. Das so erhaltene katalytisch aktive Material wurde mittels einer Biplexquerstromsichtmühle (BQ 500) (Fa. Hosokawa-Alpine Augsburg) zu einem feinteiligen Pulver gemahlen, von dem 50 % der Pulverpartikel ein Sieb der Maschenweite 1 bis 10 µm passierten und dessen Anteil an Partikeln mit einer Längstausdehnung oberhalb von 50 µm weniger als 1 % betrug. Daraus wurde ein Schalenkatalysator hergestellt, wie zuvor in Vergleichsbeispiel 1 beschrieben.

### Beispiel 4 (erfindungsgemäß)

Es wurde wie in Beispiel 3 verfahren, wobei jedoch auf die Trocknung für 2 h bei 250 °C im Hordenofen verzichtet wurde.

### II. Anwendungstechnische Eigenschaften

### a) Falltest

20 g Katalysator wurden durch ein 3,5 m langes Rohr mit lichtem Durchmesser von 25 mm fallengelassen. Der Katalysator fällt in eine unmittelbar unter dem Rohr stehende Schale, wird von dem bei Aufschlag entstehenden Staub abgetrennt und wieder durch das Rohr fallengelassen. Der Gesamtmassenverlust nach ein- bis dreimaligem Fallenlassen ist ein Maß für die Abriebfestigkeit des Katalysators. Die Ergebnisse sind in der nachfolgenden Tabelle 1 aufgelistet.

**Tabelle 1**

| Falltest Durchgang | Katalysator aus Beispiel Nr. Massenverlust Aktivmasse [Gew.-%] | | | |
|---|---|---|---|---|
| | 1 Vergleich | 2 erfindungsgemäß | 3 Vergleich | 4 erfindungsgemäß |
| 1 | 0,93 | 0,56 | 0,90 | 0,59 |
| 2 | 2,99 | 1,33 | 2,44 | 1,19 |
| 3 | 4,35 | 1,99 | 3,29 | 1,89 |

## Patentansprüche

1. Verfahren zum Befüllen eines Reaktors mit Katalysatorteilchen, die zumindest auf ihrer Oberfläche eine katalytisch aktive Multielementoxidmasse aufweisen, bei dem man Katalysatorteilchen bereitstellt, die eine bei 20 °C und 1 atm flüssige Substanz umfassen, und diese Katalysatorteilchen in den Reaktor füllt, wobei die bereitgestellten Katalysatorteilchen einen Gehalt an flüssiger Substanz von 0,05 bis 10 Gew.-%, bezogen auf ihr Gesamtgewicht, aufweisen,
wobei die flüssige Substanz ausgewählt ist unter organischen Verbindungen, die einen Siedepunkt bei 1 atm von mehr als 100 °C aufweisen, und Gemischen solcher organischen Verbindungen mit Wasser, und
wobei der Reaktor und die Katalysatorteilchen beim Befüllen des Reaktors eine Temperatur von höchstens 50 °C aufweisen.

2. Verfahren nach Anspruch 1, wobei die Katalysatorteilchen ausgewählt sind unter Formkörpern, die wenigstens eine katalytisch aktive Multielementoxidmasse umfassen und Teilchen, die wenigstens eine schalenförmig auf einen Träger aufgebrachte katalytisch aktive Multielementoxidmasse umfassen.

3. Verfahren nach einem der vorhergehenden Ansprüche, wobei der Reaktor wenigstens ein Reaktorrohr umfasst.

4. Verfahren nach Anspruch 3, wobei das Reaktorrohr eine Länge von 500 mm bis 20000 mm, bevorzugt 1000 bis 10000 mm, aufweist.

5. Verfahren nach einem der Ansprüche 3 oder 4, wobei das Reaktorrohr einen Innendurchmesser von 5 bis 100 mm, bevorzugt 10 bis 50 mm, aufweist.

6. Verfahren nach einem der Ansprüche 3 bis 5, wobei das Verhältnis der Länge des Reaktorrohrs zu seinem Durchmesser in einem Bereich von 2 bis 10000, bevorzugt 5 bis 7000, liegt.

7. Verfahren nach einem der Ansprüche 3 bis 6, wobei der Reaktor als Rohrbündelreaktor (Vielkontaktrohrreaktor) ausgebildet ist.

8. Verfahren nach Anspruch 7, wobei der Rohrbündelreaktor wenigstens 5000 Reaktorrohre aufweist.

9. Verfahren nach einem der vorhergehenden Ansprüche, wobei die zum Befüllen des Reaktors bereitgestellten Katalysatorteilchen die flüssige Substanz in assoziierter Form enthalten.

10. Verfahren nach einem der vorhergehenden Ansprüche, wobei die bereitgestellten Katalysatorteilchen beim Falltest (20 g-Portion Katalysator, Fallrohrinnendurchmesser 25 mm, Länge 3500 mm) eine Gewichtsabnahme von höchstens 0,8 Gew.-%, bevorzugt von höchstens 0,7 Gew.%, aufweisen.

11. Verfahren nach einem der vorhergehenden Ansprüche, wobei die bereitgestellten bindemittelhaltigen Katalysatorteilchen bei dreimaliger Wiederholung des Falltests mit denselben Teilchen eine Gewichtsabnahme von höchstens 3 Gew.-%, bevorzugt von höchstens 2,5 Gew.-%, aufweisen.

12. Verfahren nach einem der vorhergehenden Ansprüche, wobei die bereitgestellten bindemittelhaltigen Katalysatorteilchen einen mittleren Außendurchmesser von 1 bis 40 mm, bevorzugt 2 bis 30 mm, insbesondere 3 bis 20 mm, aufweisen.

13. Verfahren nach einem der vorhergehenden Ansprüche, wobei man die Katalysatorteilchen bereitstellt, indem man einen Träger mit einem Bindemittel, das eine bei 20 °C und 1 atm flüssige Substanz umfasst oder daraus besteht, und der katalytisch aktiven Masse in Kontakt bringt und anschließend gegebenenfalls das Bindemittel teilweise entfernt.

14. Verfahren nach Anspruch 13, bei dem man den Träger zunächst mit dem die flüssige Substanz enthaltenden Bindemittel befeuchtet, danach durch Inkontaktbringen mit trockener, feinteiliger, aktiver Katalysatormasse an der Oberfläche des befeuchteten Trägerkörpers eine Schicht aktiver Katalysatormasse anhaftet und gegebenenfalls anschließend das flüssige Bindemittel teilweise entfernt.

15. Verfahren nach Anspruch 14, bei dem man die Schritte des Befeuchtens des Trägers, Inkontaktbringens mit der Katalysatormasse und Entfernen des flüssigen Bindemittels ein- oder mehrfach wiederholt, wobei bis auf die letzte Wiederholung das flüssige Bindemittel vollständig entfernt werden kann.

16. Verfahren nach einem der vorhergehenden Ansprüche, bei dem als Träger Trägerkörper mit einer Oberflächenrauhigkeit R_{z} des Trägerkörpers von 40 bis 100 µm eingesetzt werden.

17. Verfahren nach einem der vorhergehenden Ansprüche, bei dem Trägerkörper mit einem Gesamtvolumen der Poren des Trägerkörpers, bezogen auf das Volumen des Trägerkörpers, von höchstens 1 Vol.-% eingesetzt werden.

18. Verfahren nach einem der vorhergehenden Ansprüche, wobei der Reaktor und die Katalysatorteilchen beim Befüllen des Reaktors eine Temperatur von höchstens 40 °C, bevorzugt von höchstens 30 °C, aufweisen.

19. Verfahren nach einem der vorhergehenden Ansprüche, bei dem man die Katalysatorteilchen in den Reaktor füllt, indem man sie in eine Öffnung an der Oberseite des Reaktors gibt und unter Einwirkung der Schwerkraft in den Reaktor einträgt.

20. Verfahren nach Anspruch 19, wobei sich im Reaktor keine Füllhilfe befindet, die zu einer Verlangsamung der Fallgeschwindigkeit der Katalysatorteilchen führt.

21. Verfahren nach einem der vorhergehenden Ansprüche, bei dem man den befüllten Reaktor einer Behandlung zur Entfernung der flüssigen Substanz unterzieht.

22. Verfahren nach einem der Ansprüche 1 bis 21, bei dem man den befüllten Reaktor anschließend zur gasphasenkatalytisch oxidativen Herstellung von Acrylsäure aus Acrolein einsetzt.

23. Verfahren nach einem der Ansprüche 1 bis 21, bei dem man den befüllten Reaktor anschließend zur gasphasenkatalytisch oxidativen Herstellung von Methacrylsäure aus Methacrolein einsetzt.

24. Verfahren nach einem der Ansprüche 1 bis 21, bei dem man den befüllten Reaktor anschließend zur gasphasenkatalytisch oxidativen Herstellung von Acrolein aus Propen einsetzt.

25. Verfahren nach einem der Ansprüche 1 bis 21, bei dem man den befüllten Reaktor anschließend zur Herstellung von Carbonsäuren und/oder Carbonsäureanhydriden durch gasphasenkatalytische Oxidation von aromatischen Kohlenwasserstoffen einsetzt.

26. Verfahren zur Herstellung von Acrylsäure durch gasphasenkatalysierte Oxidation von Acrolein, wobei die Umsetzung zumindest teilweise in einem mit Katalysatorteilchen befüllten Reaktor erfolgt, der durch ein in einem der Ansprüche 1 bis 21 definiertes Verfahren erhältlich ist.

27. Verwendung eines mit Katalysatorteilchen befüllten Reaktors, der durch ein in einem der Ansprüche 1 bis 21 definiertes Verfahren erhältlich ist, zur Durchführung von katalytischen Gasphasenreaktionen, insbesondere zur Herstellung ungesättigter aliphatischer Carbonsäuren oder Aldehyde durch Gasphasenoxidation von Aldehyden, Alkanen oder Alkenen; zur Herstellung von Nitrilen durch Ammoxidation von Alkanen oder Alkenen; zur Herstellung aromatischer Carbonsäuren oder-anhydriden durch Gasphasenoxidation aromatischer Kohlenwasserstoffe, für Epoxidierungen sowie für Hydrierungen.

## Claims

1. A process for charging a reactor with catalyst particles which have a catalytically active multi-element oxide composition at least on their surface, in which catalyst particles are provided which comprise a substance which is liquid at 20°C and 1 atm and these catalyst particles are charged into the reactor, wherein the catalyst particles provided have a content of liquid substance of from 0.05 to 10% by weight, based on their total weight, wherein the liquid substance is selected from organic compounds which have a boiling point at 1 atm of more than 100°C and mixtures of such organic compounds with water, and wherein the reactor and the catalyst particles, in the course of charging of the reactor, have a temperature of at most 50°C.

2. The process according to claim 1, wherein the catalyst particles are selected from shaped bodies which comprise at least one catalytically active multielement oxide composition and particles which comprise at least one catalytically active multi-element oxide composition applied in coating form to a support.

3. The process according to either of the preceding claims, wherein the reactor comprises at least one reactor tube.

4. The process according to claim 3, wherein the reactor tube has a length of from 500 mm to 20 000 mm, preferably from 1000 to 10 000 mm.

5. The process according to either of claims 3 and 4, wherein the reactor tube has an internal diameter of from 5 to 100 mm, preferably from 10 to 50 mm.

6. The process according to any of claims 3 to 5, wherein the ratio of the length of the reactor tube to its diameter is in a range from 2 to 10 000, preferably from 5 to 7000.

7. The process according to any of claims 3 to 6, wherein the reactor is designed as a tube bundle reactor (multiple catalyst tube reactor).

8. The process according to claim 7, wherein the tube bundle reactor has at least 5000 reactor tubes.

9. The process according to any of the preceding claims, wherein the catalyst particles provided for charging the reactor comprise the liquid substance in associated form.

10. The process according to any of the preceding claims, wherein the catalyst particles provided have a weight decrease of at most 0.8% by weight, preferably of at most 0.7% by weight, in the drop test (20 g portion of catalyst, drop tube internal diameter 25 mm, length 3500 mm).

11. The process according to any of the preceding claims, wherein the binder-containing catalyst particles provided, in triple repetition of the drop test with the same particles, have a weight decrease of at most 3% by weight, preferably of at most 2.5% by weight.

12. The process according to any of the preceding claims, wherein the binder-containing catalyst particles provided have an average external diameter of from 1 to 40 mm, preferably from 2 to 30 mm, in particular from 3 to 20 mm.

13. The process according to any of the preceding claims, wherein the catalyst particles are provided by contacting a support with a binder which comprises or consists of a substance which is liquid at 20°C and 1 atm and the catalytically active composition, and the binder is subsequently optionally partly removed.

14. The process according to claim 13, in which the support is initially moistened with the binder comprising the liquid substance, then a layer of active catalyst composition is adhered to the surface of the moistened support body by contacting with dry, finely divided, active catalyst composition, and the liquid binder is subsequently optionally partly removed.

15. The process according to claim 14, in which the steps of moistening the support, contacting with the catalyst composition and removing the liquid binder are repeated once or more than once, and the liquid binder can be removed fully except for the last repetition.

16. The process according to any of the preceding claims, in which the supports used are support bodies having a surface roughness R_{z} of the support body of from 40 to 100 µm.

17. The process according to any of the preceding claims, in which support bodies are used which have a total volume of pores of the support body, based on the volume of the support body, of at most 1% by volume.

18. The process according to any of the preceding claims, wherein the reactor and the catalyst particles, in the course of charging of the reactor, have a temperature of at most 40°C, preferably of at most 30°C.

19. The process according to any of the preceding claims, in which the catalyst particles are charged into the reactor by introducing them into an orifice at the upper end of the reactor and into the reactor under the action of gravity.

20. The process according to claim 19, wherein no charging aid which leads to a slowing of the speed at which the catalyst particles fall is present in the reactor.

21. The process according to any of the preceding claims, in which the charged reactor is subjected to a treatment to remove the liquid substance.

22. The process according to any of claims 1 to 21, in which the charged reactor is subsequently used for the catalytic oxidative preparation of acrylic acid from acrolein in the gas phase.

23. The process according to any of claims 1 to 21, in which the charged reactor is subsequently used for the catalytic oxidative preparation of methacrylic acid from methacrolein in the gas phase.

24. The process according to any of claims 1 to 21, in which the charged reactor is subsequently used for the catalytic oxidative preparation of acrolein from propene in the gas phase.

25. The process according to any of claims 1 to 21, in which the charged reactor is subsequently used to prepare carboxylic acids and/or carboxylic anhydrides by catalytic oxidation of aromatic hydrocarbons in the gas phase.

26. A process for preparing acrylic acid by gas phase catalyzed oxidation of acrolein, wherein the reaction is effected at least partly in a reactor which is charged with catalyst particles and is obtainable by a process as defined in any of claims 1 to 21.

27. The use of a reactor which is charged with catalyst particles and is obtainable by a process as defined in any of claims 1 to 21 for carrying out catalytic gas phase reactions, in particular for preparing unsaturated aliphatic carboxylic acids or aldehydes by gas phase oxidation of aldehydes, alkanes or alkenes; for preparing nitriles by ammoxidation of alkanes or alkenes; for preparing aromatic carboxylic acids or anhydrides by gas phase oxidation of aromatic hydrocarbons, for epoxidations and for hydrogenations.

## Revendications

1. Procédé de remplissage d'un réacteur avec des particules de catalyseur, qui comprennent au moins sur leur surface une masse d'oxyde de plusieurs éléments catalytiquement active, selon lequel des particules de catalyseur comprenant une substance liquide à 20 °C et 1 atm sont préparées et le réacteur est rempli avec ces particules de catalyseur, dans lequel les particules de catalyseur préparées présentent une teneur en substance liquide de 0,05 à 10 % en poids, par rapport à leur poids total, dans lequel la substance liquide est choisie parmi les composés organiques présentant un point d'ébullition à 1 atm supérieur à 100 °C et les mélanges de tels composés organiques avec de l'eau, et dans lequel le réacteur et les particules de catalyseur présentent lors du remplissage du réacteur une température d'au plus 50°C.

2. Procédé selon la revendication 1, dans lequel les particules de catalyseur sont choisies parmi les corps moulés qui comprennent au moins une masse d'oxyde de plusieurs éléments catalytiquement active et les particules qui comprennent au moins une masse d'oxyde de plusieurs éléments catalytiquement active appliquée en enveloppe sur un support.

3. Procédé selon l'une quelconque des revendications précédentes, dans lequel le réacteur comprend au moins un tube de réacteur.

4. Procédé selon la revendication 3, dans lequel le tube de réacteur présente une longueur de 500 mm à 20 000 mm, de préférence de 1000 à 10 000 mm.

5. Procédé selon l'une quelconque des revendications 3 ou 4, dans lequel le tube de réacteur présente un diamètre intérieur de 5 à 100 mm, de préférence de 10 à 50 mm.

6. Procédé selon l'une quelconque des revendications 3 à 5, dans lequel le rapport entre la longueur du tube de réacteur et son diamètre se situe dans une plage allant de 2 à 10 000, de préférence de 5 à 7000.

7. Procédé selon l'une quelconque des revendications 3 à 6, dans lequel le réacteur est configuré sous la forme d'un réacteur à faisceau de tubes (réacteur à plusieurs tubes de contact).

8. Procédé selon la revendication 7, dans lequel le réacteur à faisceau de tubes comprend au moins 5000 tubes de réacteur.

9. Procédé selon l'une quelconque des revendications précédentes, dans lequel les particules de catalyseur préparées pour le remplissage du réacteur contiennent la substance liquide sous forme associée.

10. Procédé selon l'une quelconque des revendications précédentes, dans lequel les particules de catalyseur préparées présentent lors d'un test de chute (portion de 20 g de catalyseur, diamètre intérieur du tube de chute de 25 mm, longueur de 3500 mm) une diminution de poids d'au plus 0,8 % en poids, de préférence d'au plus 0,7 % en poids.

11. Procédé selon l'une quelconque des revendications précédentes, dans lequel les particules de catalyseur contenant un liant préparées présentent lors d'une répétition à trois reprises du test de chute avec les mêmes particules une diminution de poids d'au plus 3 % en poids, de préférence d'au plus 2,5 % en poids.

12. Procédé selon l'une quelconque des revendications précédentes, dans lequel les particules de catalyseur contenant un liant préparées présentent un diamètre extérieur moyen de 1 à 40 mm, de préférence de 2 à 30 mm, notamment de 3 à 20 mm.

13. Procédé selon l'une quelconque des revendications précédentes, dans lequel les particules de catalyseur sont préparées par mise en contact d'un support avec un liant qui comprend une substance liquide à 20 °C et 1 atm ou en est constitué et la masse catalytiquement active, puis éventuellement élimination partielle du liant.

14. Procédé selon la revendication 13, dans lequel le support est tout d'abord humidifié avec le liant contenant la substance liquide, puis une couche de la masse de catalyseur active est collée sur la surface du corps support humidifié par mise en contact avec la masse de catalyseur active finement divisée sèche, puis le liant liquide est éventuellement éliminé en partie.

15. Procédé selon la revendication 14, dans lequel les étapes d'humidification du support, de mise en contact avec la masse de catalyseur et d'élimination du liant liquide sont répétées une ou plusieurs fois, le liant liquide pouvant être éliminé en totalité à l'exception de la dernière répétition.

16. Procédé selon l'une quelconque des revendications précédentes, dans lequel des corps supports présentant une rugosité de surface R_{z} du corps support de 40 à 100 µm sont utilisés en tant que support.

17. Procédé selon l'une quelconque des revendications précédentes, dans lequel des corps supports présentant un volume total des pores du corps support, par rapport au volume du corps support, d'au plus 1 % en volume sont utilisés.

18. Procédé selon l'une quelconque des revendications précédentes, dans lequel le réacteur et les particules de catalyseur présentent lors du remplissage du réacteur une température d'au plus 40 °C, de préférence d'au plus 30 °C.

19. Procédé selon l'une quelconque des revendications précédentes, dans lequel le réacteur est rempli avec les particules de catalyseur par introduction de celles-ci dans une ouverture sur le côté supérieur du réacteur et introduction dans le réacteur sous l'effet de la force de pesanteur.

20. Procédé selon la revendication 19, dans lequel le réacteur ne contient aucun auxiliaire de remplissage conduisant à un ralentissement de la vitesse de chute des particules de catalyseur.

21. Procédé selon l'une quelconque des revendications précédentes, dans lequel le réacteur rempli est soumis à un traitement pour éliminer la substance liquide.

22. Procédé selon l'une quelconque des revendications 1 à 21, dans lequel le réacteur rempli est ensuite utilisé pour la fabrication oxydative catalytique en phase gazeuse d'acide acrylique à partir d'acroléine.

23. Procédé selon l'une quelconque des revendications 1 à 21, dans lequel le réacteur rempli est ensuite utilisé pour la fabrication oxydative catalytique en phase gazeuse d'acide méthacrylique à partir de méthacroléine.

24. Procédé selon l'une quelconque des revendications 1 à 21, dans lequel le réacteur rempli est ensuite utilisé pour la fabrication oxydative catalytique en phase gazeuse d'acroléine à partir de propène.

25. Procédé selon l'une quelconque des revendications 1 à 21, dans lequel le réacteur rempli est ensuite utilisé pour la fabrication d'acides carboxyliques et/ou d'anhydrides d'acides carboxyliques par oxydation catalytique en phase gazeuse d'hydrocarbures aromatiques.

26. Procédé de fabrication d'acide acrylique par oxydation catalysée en phase gazeuse d'acroléine, dans lequel la réaction a lieu au moins en partie dans un réacteur rempli avec des particules de catalyseur, qui peut être obtenu par un procédé défini dans l'une quelconque des revendications 1 à 21.

27. Utilisation d'un réacteur rempli avec des particules de catalyseur, qui peut être obtenu par un procédé défini dans l'une quelconque des revendications 1 à 21, pour la réalisation de réactions catalytiques en phase gazeuse, notamment pour la fabrication d'acides carboxyliques aliphatiques insaturés ou d'aldéhydes par oxydation en phase gazeuse d'aldéhydes, d'alcanes ou d'alcènes ; pour la fabrication de nitriles par ammoxydation d'alcanes ou d'alcènes ; pour la fabrication d'acides carboxyliques aromatiques ou d'anhydrides par oxydation en phase gazeuse d'hydrocarbures aromatiques, pour des époxydations, ainsi que pour des hydrogénations.
